# EUROPÄISCHE PATENTSCHRIFT

(11) **EP 1 483 527 B1**
(45) Veröffentlichungstag und Bekanntmachung des Hinweises auf die Patenterteilung: **28.10.2009**
(21) Anmeldenummer: 03711942.7
(22) Anmeldetag: 08.03.2003
(51) Int. Cl.: F16L 55/26

(54) **SEGMENT FÜR EINEN SENSORTRÄGERKÖRPER EINES MOLCHES**
SEGMENT OF A SENSOR-SUPPORTING ELEMENT FOR A SCRAPER-TYPE DEVICE
SEGMENT DESTINE A UN CORPS DE SUPPORT DE CAPTEUR D'UN RACLOIR

(30) Priorität: 12.03.2002 DE 10210746
(43) Veröffentlichungstag der Anmeldung: 08.12.2004
(73) Patentinhaber: NDT Systems & Services AG, 76297 Stutensee (DE)
(72) Erfinder: RICHTER, Thomas, 76351 Linkenheim (DE); SCHWARZ, Axel, 76356 Weingarten (DE); VEIT, Christiane, 76185 Karlsruhe (DE)
(74) Vertreter: Jany, Peter
(86) Internationale Anmeldenummer: PCT/EP2003/002380
(87) Internationale Veröffentlichungsnummer: WO 2003/076841

(56) Entgegenhaltungen:
- WO-A-00/08377
- WO-A-00/08378

## Beschreibung

Die Erfindung betrifft ein Segment für einen aus Segmenten zusammengesetzten, einen Hohlkörper mit zylindrischer Hüllfläche bildenden Sensorträgerkörper eines Molches, der zur Rohrleitungsprüfung durch eine Rohrleitung bewegbar ist, wobei der Sensorträgerkörper mit zur Durchführung der Rohrleitungsprüfung erforderlichen Sensoren bestückt ist. Derartige Molche werden zur Durchführung von Messungen und zur zerstörungsfreien Werkstoffprüfung durch Rohrleitungen bewegt. Sie umfassen in der Regel einen Sensorträgerkörper, der mit den Sensoren zur Durchführung der Rohrleitungsprüfung bestückt ist und einen oder mehrere weitere Molchkörper, die Geräte zur Meßwertaufzeichnung und Meßwertverarbeitung sowie die Einrichtung für die Stromversorgung beinhalten.

Molche werden in Fernleitungen wie Ölpipelines zur Ermittlung von Schäden an der Rohrwand, wie z.B. Korrosionsbildung, Rißbildung oder Lochfraß, eingesetzt. Der Molch dient dazu, genaue Kenntnis über Art, Ausmaß und Lage von Schäden an der Innenwand, im Material oder an der Außenwand des Rohres zu gewinnen. Dabei tasten die Sensoren des Molches den gesamten Umfang der Rohrinnenwand ab, wenn der Molch durch die Rohrleitung bewegt wird. Der Molch wird üblicherweise mittels des in der Rohrleitung transportierten Mediums durch die Rohrleitung bewegt. Zur Rohrleitungsprüfung werden Sensoren mit verschiedenen Funktionsweisen, beispielsweise Ultraschall- oder elektro-magnetische Sensoren eingesetzt. Der Sensorträgerkörper hat die Aufgabe, die Sensoren in einer bestimmten Position bzw. in einem bestimmten Abstand zu der Rohrinnenwand zu führen.

Es sind verschiedene Arten von Sensorträgerkörpern für Molche bekannt. Bei einer bekannten Ausführungsform werden Sensorträgerkörper eingesetzt, bei denen die Sensoren auf Segmenten angeordnet sind, die einzelne, hintereinander liegende Segmentringe bilden. Die Segmentringe sind untereinander mit einer starren, in Bewegungsrichtung des Molches orientierten Achse verbunden. Nachteilig wirken sich hier insbesondere die geringe Anpassungsfähigkeit des Sensorträgerkörpers an Rohrkrümmungen aufgrund der starren Achse und die resultierende große Baulänge des Sensorträgerkörpers aus.

Es sind weiter Sensorträgerkörper bekannt, bei denen die Sensoren mittels aufwendiger mechanischer Vorrichtungen, wie z.B. einem Gestänge, mit einem Träger verbunden sind, um zu erreichen, daß die einzelnen Sensoren einen weitgehend gleichen Abstand von der Rohrinnenwand aufweisen, wenn der Sensorträgerkörper durch die Rohrleitung bewegt wird. Nachteilig bei derartigen mechanischen Vorrichtungen ist die hohe Störanfälligkeit, wodurch die Meßgenauigkeit der Sensoren beeinträchtigt wird.

Eine andere bekannte Ausführungsform verwendet um die Längsrichtung gedrallt verlaufende Kufen. Die Sensoren liegen hintereinander folgend in den Kufen, und durch den Drall der Kufen wird ein seitlicher Versatz und somit die Umfangsdeckung der Sensoren ermöglicht. Nachteilig dabei ist, daß die nach vorne weisenden Seitenkanten der gedrallten Kufen, die jeweils einen großen Bereich des Rohrumfangs abdecken, zum Abschaben von Verunreinigungen an der Rohrwandung und zu Geradstellkräften auf die Kufen führen. Beides beeinträchtigt die Prüfergebnisse, z.B. durch Zusetzen der Sensoren mit Wachs oder durch Positionierungsfehler der Sensoren. Da der Versatz der Sensoren durch den Drall der Kufen realisiert wird, kann eine kürzere Baulänge nur durch eine Erhöhung des Dralls realisiert werden. Aufgrund der damit einhergehenden Nachteile kann somit keine kurze Baulänge des Sensorträgerkörpers und nur eine geringe Bogenpassierbarkeit erzielt werden.

Aus der DE 3626646 C2 ist ein als Manschette ausgebildeter Sensorträgerkörper bekannt. Die Manschette ist in parallele Streifensegmente, in denen die Sensoren angebracht sind, unterteilt. Wenn die Streifensegmente achsparallel zur Molchachse orientiert sind, läßt sich ein Überlappen der von den Sensoren erfaßten Meßbereiche oder ein Versatz der Sensoren in Umfangsrichtung kaum realisieren. In einer bevorzugten Ausführungsform dieses Sensorträgerkörpers bilden daher die Mittelachsen der parallelen Streifensegmente einen spitzen Winkel zur Rohrmittelachse, womit sich ein Versatz der Sensoren in Umfangsrichtung ergibt, so daß von den in einem Streifensegment hintereinander folgend angeordneten Sensoren ein Flächenstreifen an der Rohrwandung überstrichen wird, der breiter ist als die Wirkfläche eines einzelnen Sensors. Nachteilig wirkt sich dabei aus, daß auf die schräg zur Bewegungsrichtung des Molches orientierten Streifensegmente bei der Bewegung durch eine Rohrleitung Stellkräfte in Richtung auf eine Ausrichtung der Streifensegmente parallel zur Rohrmittelachse führen. Dies gefährdet zum einen die angestrebte Meßgenauigkeit und führt zum anderen zum Schaben an Verschmutzungen oder Rohrunebenheiten an der Rohrwand und damit zu einer weiteren Beeinträchtigung der Meßergebnisse oder Schädigung des Molches.

Aus dem Dokument US 5,616,854 ist eine Vorrichtung für die pneumatische Leckprüfung von Rohrleitungen bekannt, bei der von außen eine Manschette an die zu prüfende Rohrleitung angelegt wird.

Aus dem Dokument WO 00 08378 A ist ein Segment mit den Markmalen des Oberbegriffs des Anspruchs 1 bekannt.

Der Erfindung liegt unter Berücksichtigung des Standes der Technik die Aufgabe zugrunde, ein eingangs genanntes Segment für einen Sensorträgerkörper eines Molches bereitzustellen, das mit gleichartigen Segmenten zu einem Sensorträgerkörper zusammengesetzt werden kann, der neben einer hohen Betriebs- und Funktionssicherheit eine hohe Bogenpassierbarkeit aufweist. Ferner richtet sich die Erfindung auf einen entsprechend zusammengesetzten Sensorträgerkörper bzw. Molch.

Diese Aufgabe wird erfindungsgemäß durch ein Segment mit den Merkmalen des beigefügten Anspruchs 1 gelöst. Bevorzugte Ausgestaltungen und Weiterbildungen der Erfindung ergeben sich aus den abhängigen Patentansprüchen und der nachfolgenden Beschreibung mit zugehörigen Zeichnungen.

Ein erfindungsgemäßes Segment umfaßt also mindestens zwei Kufenpaare, die jeweils aus zwei im wesentlichen zueinander parallelen Kufen bestehen. Die Kufenpaare sind entgegen der Bewegungsrichtung des Molches hintereinanderfolgend angeordnet. Die Kufen sind in Bewegungsrichtung des Molches, also in Längsrichtung des Segments orientiert. Hintereinander folgende Kufen sind mit Verbindungselementen elastisch miteinander verbunden. Die elastische Verbindung, beispielsweise aus einem elastischen Werkstoff, vorzugsweise Kunststoff, oder mit Metallfederelementen der Kufen bewirkt, daß sich die Kufen an Unebenheiten der Rohrinnenwand, wie z.B. Einbeulungen, anpassen können und der gesamte Sensorträgerkörper Durchmesserschwankungen der untersuchten Rohrleitung ausgleichen kann, wobei die Kufen immer mit ihrer Oberseite an der Rohrinnenwand anliegen und die Sensoren in ihrem Sollabstand zur Rohrwand führen.

Zwischen den Kufen mindestens eines Kufenpaares ist eine Trägerplatte für Sensoren angeordnet. Die Trägerplatte kann als separates Bauteil an den Kufen angebracht oder einstückig mit den Kufen ausgebildet sein.

Das Segment ist derart ausgebildet, daß es mit Hilfe einer die Segmente verbindenden Verbindungsvorrichtung mit weiteren solchen Segmenten zu dem Hohlkörper mit zylindrischer Hüllfläche zusammengefügt werden kann.

Mit einem erfindungsgemäßen Segment kann ein Sensorträgerkörper für einen Molch gebildet werden, der eine hohe Betriebs- und Funktionssicherheit aufweist, die Sensoren in einer definierten Lage zu der Rohrinnenwand führt, flexibel ist, so daß Rohrdurchmesserschwankungen kompensiert werden und an Unebenheiten der Rohrinnenwand ein materialschonendes Nachgeben möglich wird, eine kompakte und kurze Baulänge aufweist, wodurch sich die Bogenpassierbarkeit verbessert, ohne Querkräfte bzw. Geradstellkräfte an den Segmenten durch den Molch bewegbar ist, so daß die Meßgenauigkeit hoch und der Abrieb an Rohr und Segmenten gering ist und der zudem aufgrund seiner Struktur unaufwendig zu montieren, zu demontieren und zu warten ist.

Das Merkmal, daß die Kufen im wesentlichen parallel sind, ist so zu verstehen, daß der Winkel zwischen den Kufen kleiner als 15°, bevorzugt kleiner als 10° und besonders bevorzugt kleiner als 5° ist. Bei einer solchen Geradstellung bleiben die Vorteile der Erfindung hinsichtlich der geringen Schabwirkung und der kurzen Baulänge erhalten.

Aufgrund der Geradstellung der Kufen ist die Verschmutzungsgefahr durch Abschaben minimiert. Die Sensoren können in den Trägerplatten beliebig montiert werden, so daß eine kompakte Bauform oder auch ein zur Erhöhung der Meßgenauigkeit überlappender Abtastbereich realisiert werden kann.

Bei der Erfindung ist kein Drall der Kufen erforderlich um einen Versatz der Sensoren zu erzielen, und die Sensoren können beliebig und kompakt auf den Trägerplatten angeordnet werden. Daraus resultiert eine kurze Baulänge, eine gute Bogengängigkeit und eine geringe Schabwirkung.

Die Kufen selbst können aus einem relativ festen, unelastischen Material bestehen, falls eine hohe Eigenstabilität der Kufen gewünscht wird. In diesem Fall wird die Elastizität des Sensorträgerkörpers im wesentlichen durch die elastischen Verbindungselemente zwischen den Kufen und/oder Segmenten erzielt. In einer bevorzugten Ausführungsform bestehen die Kufen aus elastischem Material, vorzugsweise demselben wie die Verbindungselemente, insbesondere bei einer einstückigen Ausbildung, um eine hohe Flexibilität des Segmentes zu erzielen. Erforderlichenfalls können die Kufen auch mit versteifenden Elementen versehen werden, sofern die durch die Verbindung mit den Trägerplatten erzielte Festigkeit nicht ausreichen sollte.

Bei einer weiteren bevorzugten Ausführungsform ist mindestens eine weitere Trägerplatte für Sensoren zwischen einer Kufe eines Segmentes und einer Kufe eines benachbarten Segmentes anbringbar. Die Segmente eines Sensorträgerkörpers können mit zwischen den Segmenten angeordneten Trägerplatten zu dem Sensorträgerkörper verbunden werden. Bei einer weiteren bevorzugten Ausführungsform des Segmentes ist die Verbindungsvorrichtung in der in Bewegungsrichtung des Molches liegenden Stirnseite des Segmentes anbringbar. Die Verbindungsvorrichtung ist vorzugsweise als Flansch ausgebildet, der die Segmente stirnseitig verbindet. Eine andere vorteilhafte Ausführungsform einer Verbindungsvorrichtung sind zwischen benachbarten Segmenten angebrachte U-förmige Federplatten.

Die Anzahl der Kufenpaare aus jeweils zwei zueinander parallelen Kufen eines Segmentes liegt vorzugsweise zwischen zwei und zehn, besonders bevorzugt zwischen zwei und vier. Sie hängt unter anderem von der zur Erzielung einer bestimmten Meßgenauigkeit erforderlichen Anzahl von Trägerplatten für die Sensoren und von der gewünschten Bogenpassierbarkeit des Sensorträgerkörpers ab.

In einer vorteilhaften Ausführungsform ist die in Bewegungsrichtung eines Molches liegende Stirnseite eines Segmentes derart konisch zulaufend ausgebildet, beispielsweise durch einen konisch zulaufenden Abschnitt des Segments, daß der aus den Segmenten zusammengesetzte zylindrische Hohlkörper an seiner Stirnseite einen kegelstumpfförmigen Abschnitt aufweist. Dadurch kann der als Sensorträgerkörper dienende Hohlkörper auch dann problemlos durch eine Rohrleitung gezogen werden, wenn sich ihr Querschnitt durch Unregelmäßigkeiten der Rohrwand wie Einbeulungen verringert.

Die hintereinander angeordneten Kufenpaare werden vorteilhafterweise mit elastischen, vorzugsweise gewinkelt an den Kufen angebrachten Zwischengliedern, die vorzugsweise einen runden, ovalen, rechteckigen oder trapezförmigen Querschnitt, aufweisen, miteinander verbunden. Der Querschnitt der Zwischenglieder kann kleiner als der Querschnitt der Kufen sein, um die elastische Nachgiebigkeit der Segmente zu verbessern. Die Zwischenglieder können parallel, aber auch auseinander oder zueinander verlaufen, wobei die Zwischenglieder verschiedener Kufenpaare eines Segmentes einen unterschiedlichen derartigen Verlauf aufweisen können.

Durch die elastischen Zwischenglieder wird erreicht, daß die hintereinander angeordneten Kufenpaare möglichst parallel zur Rohrachse ausgerichtet sind und die Kufen Durchmesserschwankungen und Unebenheiten folgen können. Außerdem kann mit Hilfe dieser elastischen Zwischenglieder und einer geringen Baulänge eines aus erfindungsgemäßen Segmenten zusammengesetzten Sensorträgerkörpers die Bogenpassierbarkeit des Sensorträgerkörpers entscheidend erhöht werden, so daß auch Abschnitte von Rohrleitungen mit starken Rohrkrümmungen und einem geringen Krümmungsradius passierbar sind.

Zur Verbesserung der Stabilität des Sensorträgerkörpers, zur Erhöhung der Zugbelastbarkeit der Segmente und des Sensorträgerkörpers, beispielsweise zur Verhinderung des Abreißens oder Beschädigens des Segments bei abrupt auftretenden Kräften beim Passieren von in das Rohrinnere ragenden Abgängen, und zur Verbesserung der Spurhaltigkeit der Sensoren bei der Bewegung durch das Rohr können die nachfolgend erläuterten Merkmale vorteilhaft sein.

Nach einem ersten vorteilhaften Merkmal wird vorgeschlagen, daß das Segment zwischen mindestens einem Kufenpaar an seiner in Bewegungsrichtung des Molches vorderen Seite ein die Kufen des Kufenpaares verbindendes Querstegteil aufweist. Nach einem anderen vorteilhaften Merkmal kann vorgesehen sein, daß das Segment zwischen der Trägerplatte, die zwischen einem Kufenpaar angebracht ist und einer Kufe eines entgegen der Bewegungsrichtung des Molches nachfolgenden Kufenpaares ein die Trägerplatte und die Kufe verbindendes Verbindungsglied aufweist. Vorzugsweise ist das Verbindungsglied in Längsrichtung der Kufe angeordnet und sind die Verbindungsglieder zwischen einer Trägerplatte und einer Kufe mit Hülsen an der Trägerplatte angebracht.

Nach einem weiteren vorteilhaften Merkmal wird vorgeschlagen, daß das Segment ein Querstegteil aufweist, mit dem es mit einem benachbarten Segment verbindbar ist. Dabei kann ferner vorgesehen sein, daß das Querstegteil derart ausgebildet ist, daß es mit einem korrespondierenden Querstegteil eines benachbarten Segments verbindbar ist, so daß sich die beiden Querstegteile zu einem benachbarte Segmente verbindenden Quersteg ergänzen.

Dabei kann ein Zwischenglied zur Verbindung zweier aufeinander folgender Kufen mit einer Hülse an dem Querstegteil eines Segmentes angelenkt sein. Die Hülse schafft eine zugfeste, aber flexible Verbindung.

Die Länge der Kufen beträgt vorzugsweise zwischen 5 cm und 300 cm, besonders bevorzugt zwischen 10 cm und 50 cm. Sie richtet sich nach der bevorzugten Länge der anbringbaren Trägerplatten und nach der erforderlichen Bogenpassierbarkeit der Kufen und des Sensorträgerkörpers. Je geringer die Länge der Kufen, desto höher ist ihre Bogenpassierbarkeit, desto geringer aber auch die Länge der zwischen den Kufen anbringbaren Trägerplatten und damit die Anzahl der Sensoren, mit der eine Trägerplatte bestückt werden kann.

Die Länge der Zwischenglieder, mit denen hintereinander angeordnete Kufen miteinander verbunden sind, liegt vorzugsweise zwischen 2 cm und 50 cm. In einer bevorzugten Ausführungsform eines erfindungsgemäßen Segmentes weisen sämtliche Kufen eine einheitliche Länge auf. Auch die Zwischenglieder, die angrenzende Kufen miteinander verbinden, können alle eine einheitliche Länge aufweisen. Dies führt zum einen zur Senkung der Herstellungskosten und zum anderen zu einem einheitlichen mechanischen Verhalten des Segmentes auf seiner gesamten Länge.

Das Verhältnis der Länge der Zwischenglieder zur Länge der durch die Zwischenglieder verbundenen angrenzenden Kufen liegt vorzugsweise zwischen 1/10 und 5, besonders bevorzugt zwischen 2/10 und 1. Hierbei ist zu berücksichtigen, daß einerseits eine geringe Länge der Zwischenglieder die Baulänge des Segmentes bzw. Sensorträgerkörpers verringert, andererseits eine größere Länge der Zwischenglieder die Flexibilität des Segmentes bzw. Sensorträgerkörpers erhöht, beides sich jedoch günstig auf die Bogenpassierbarkeit auswirkt.

Der Querschnitt der Kufen kann zur Erhöhung ihrer Stabilität vorteilhafterweise trapezförmig, parallelogrammartig oder rechteckig ausgebildet sein. Ebenfalls stabilitätsbeeinflussend wirkt sich das Verhältnis von Höhe der Kufe, d.h. der Ausdehnung der Kufe in Radialrichtung des aus den erfindungsgemäßen Segmenten zusammengesetzten Sensorträgerkörpers zur Breite der Kufe, d.h. der Ausdehnung der Kufe in Umfangsrichtung des Sensorträgerkörpers aus, das vorzugsweise zwischen 1/3 und 3 liegt.

Die Kufen können an ihrer Oberseite quer zu ihrer Längsrichtung, die der Bewegungsrichtung des Molches entspricht, eben oder vorzugsweise gewölbt sein. Eine ebene Ausbildung ist bei schmalen Kufen oder kleinen Rohrdurchmessern zweckmäßig und eine gewölbte Oberseite ist besonders bei breiten Kufen oder großen Rohrdurchmessern vorteilhaft. Bevorzugt ist der Krümmungsradius der Wölbung dem Radius der zylindrischen Hüllenfläche des aus erfindungsgemäßen Segmenten zusammengesetzten Sensorträgerkörpers angepaßt, damit die Kufen eines Sensorträgerkörpers, der durch eine Rohrleitung bewegt wird, weitgehend an der Rohrinnenwand anliegen. Zur Verringerung der Reibung zwischen den Kufen und der Rohrinnenwand, und damit zur Verringerung des Abriebes der Kufen sowie zur Erhöhung ihrer Standzeit, können in die Kufen in regelmäßigen Abständen Verschleißschuhe aus metallenem Werkstoff eingelassen sein, die bündig mit der Oberfläche der Kufen abschließen. Zudem erhöht sich durch die Verschleißschuhe die Stabilität der Kufen. Eine Kufe ist vorzugsweise zwischen 1/10 und 3/4 ihrer Länge mit eingelassenen Verschließschuhen besetzt.

Die Kufen können, beispielsweise zwischen den Verschleißschuhen, Aussparungen aufweisen. Besonders vorteilhaft können derartige Aussparungen sein, um einen Freiraum für das Meßfeld der Sensoren, beispielsweise für schräg schallende Untraschallsensoren zu schaffen.

Die Trägerplatten für Sensoren können an der Unterseite der Kufen angebracht werden. Dies erhöht die Stabilität des Segmentes und damit des Sensorträgerkörpers. Dabei können die Kufen Bohrungen zur Aufnahme von Schrauben aufweisen, während die Trägerplatten mit zu den Schrauben passenden Innengewinden versehen sind, so daß die Trägerplatten an die Kufen angeschraubt werden können. Dies ermöglicht eine einfache Montage des Segmentes und des Segmentträgerkörpers und einen einfachen Austausch von Segmenten, Trägerplatten und Sensoren bei einer Reparatur.

Die Trägerplatten können gewölbt oder vorzugsweise zur Einsparung von Herstellungskosten eben sein, wobei ein etwa erforderlicher gleichbleibender Abstand der Sensoren zur Rohrinnenwand durch die entsprechende Anpassung der Einbauhöhe der Sensoren erreicht wird.

Die Unterseiten der Kufen sind vorzugsweise ebenfalls eben und derart abgeschrägt, daß sie der Orientierung der anzubringenden Trägerplatten in Radialrichtung des Sensorträgerkörpers angepaßt sind.

Ein erfindungsgemäßes Segment kann ganz oder in wesentlichen Teilen als einstückiges Teil ausgebildet sein. Das einstückige Teil kann vorzugsweise insbesondere eines oder mehrere der folgenden Komponenten umfassen: Kufen, elastische Verbindungselemente, Zwischenglieder, konisch zulaufender Segmentabschnitt, Querstegteile. Durch die einstückige Ausbildung ist die Herstellung vereinfacht.

Das Segment oder Teile hiervon, insbesondere ein mehrere Komponenten umfassendes Teil, besteht vorzugsweise aus einem elastischen Kunststoff, der einerseits genügend elastisch ist, um eine Beweglichkeit, insbesondere der Verbindungselemente der Zwischenglieder zu ermöglichen, und andererseits über eine ausreichende Festigkeit und Stabilität verfügt, damit die Segmente, insbesondere die Kufen, ihre Aufgabe zum Führen der Sensoren erfüllen. In der Praxis haben sich elastische Kunststoffe mit einer Härte von 65 bis 95 Shore A als vorteilhaft erwiesen. Ein geeignetes Material ist beispielsweise Polyurethan.

Mehrere erfindungsgemäße Segmente können einen Sensorträgerkörper in Form eines zylindrischen Hohlkörpers für einen Molch bilden. Der Sensorträgerkörper wird vorzugsweise aus einzelnen Segmenten zusammengesetzt, kann aber auch einstückig ausgebildet sein. Zwischen benachbarten Segmenten eines solches Sensorträgerkörpers können U-förmige Federplatten angebracht werden, um eine Vorspannung des Sensorträgerkörpers zu erzeugen, so daß die Kufen der Segmente an die Innenwand des Rohres, in dem der Sensorträgerkörper bewegt wird, angedrückt werden. Bevorzugterweise werden diese U-förmigen Federplatten an den Trägerplatten befestigt, die an der Unterseite der Kufen angebracht sind. Ein Molch, der mindestens einen erfindungsgemäßen Sensorträgerkörper umfaßt, kann zur Durchführung von Messungen und zur zerstörungsfreien Werkstoffprüfung durch Rohrleitungen bewegt werden.

Es werden im folgenden anhand von zwei Figuren Ausführungsbeispiele bekannter Sensorträgerkörper erläutert. Anhand der in den weiteren Figuren dargestellten Ausführungsbeispiele wird die Erfindung näher erläutert. Es zeigen
- Fig. 1: eine schematische Seitenansicht eines bekannten Sensorträgerkörpers mit verdrallten Kufen,
- Fig. 2: eine schematische Seitenansicht eines anderen bekannten Sensorträgerkörpers mit zwei aus Streifensegmenten gebildeten Segmentringen,
- Fig. 3: eine Seitenansicht eines Abschnitts eines Molches mit einem ersten erfindungsgemäßen Sensorträgerkörpers und einem weiteren Molchkörper,
- Fig. 4: eine perspektivische Ansicht eines erfindungsgemäßen Segmentes mit zwei Kufenpaaren zu Fig. 3,
- Fig. 5: eine Seitenansicht des Segmentes von Fig. 4,
- Fig. 6: eine Aufsicht auf das Segment von Fig. 4,
- Fig. 7: eine schematische Aufsicht auf ein Kufenpaar eines Segmentes gemäß Fig. 4 mit Darstellung der Bewegungsspuren der Sensoren,
- Fig. 8: eine perspektivische Ansicht eines abgewandelten Segmentes gemäß Fig. 4 mit zwei Kufenpaaren mit Verschleißschuhen,
- Fig. 9: eine Seitenansicht eines Sensorträgerkörpers gemäß Fig. 3 mit Segmenten gemäß Fig. 4,
- Fig. 10: einen Schnitt A-A' zu Fig. 9,
- Fig. 11: einen Schnitt B-B' zu Fig. 9,
- Fig. 12: einen Schnitt C-C' zu Fig. 9,
- Fig. 13: die Stirnseite eines Sensorträgerkörpers gemäß Fig. 9 mit Flansch,
- Fig. 14: die Stirnseite des Sensorträgerkörpers von Fig. 9 ohne Flansch,
- Fig. 15: eine Seitenansicht eines zweiten Sensorträgerkörpers mit Segmenten mit vier Kufenpaaren,
- Fig. 16: eine Detaildarstellung eines Schnittes A-A' zu Fig. 15,
- Fig. 17: eine perspektivische Ansicht eines Segmentes mit vier Kufenpaaren zu Fig. 15,
- Fig. 18: eine Seitenansicht des Segmentes von Fig. 17,
- Fig. 19: eine Aufsicht auf das Segment von Fig. 17,
- Fig. 20: eine schematische Aufsicht auf vier Kufenpaare eines Segmentes mit Darstellung der Bewegungsspuren der Sensoren,
- Fig. 21: eine perspektivische Ansicht einer dritten Ausführungsform eines erfindungsgemäßen Segmentes mit drei Kufenpaaren,
- Fig. 22: eine perspektivische Ansicht von drei zusammengesetzten Segmenten gemäß Fig. 21,
- Fig. 23: eine perspektivische Ansicht eines Sensorträgerkörpers, der aus Segmenten gemäß Fig. 21 zusammengesetzt ist,
- Fig. 24: eine Seitenansicht eines Sensorträgerkörpers gemäß Fig. 23,
- Fig. 25: einen Schnitt zu Fig. 24,
- Fig. 26: einen weiteren Schnitt zu Fig. 24 und
- Fig. 27: eine schematische Aufsicht auf ein Kufenpaar eines Segmentes gemäß Fig. 21 mit Darstellung der Bewegungsspuren der Sensoren.

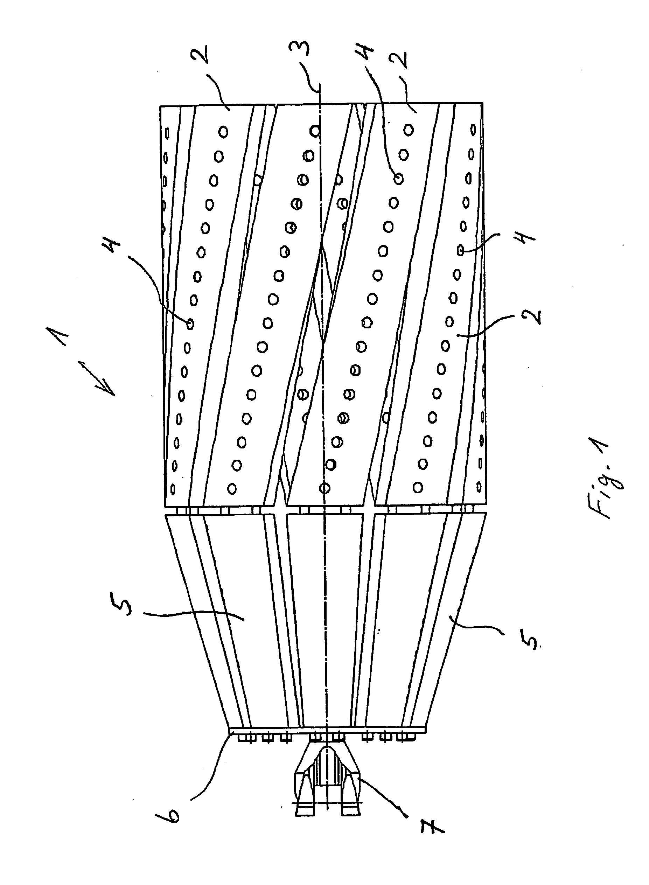

Die Figur 1 zeigt schematisch einen bekannten Sensorträgerkörper 1, der aus Streifensegmenten 2 in Form von um die Längsachse des Sensorträgerkörpers 1 verdrallten Kufen zusammengesetzt ist, die zur Mittelachse 3 des Sensorträgerkörpers 1 einen spitzen Winkel bilden. In den Streifensegmenten 2 befinden sich Bohrungen 4 zur Aufnahme von Sensoren. An der Stirnseite weist der Sensorträgerkörper 1 einen konisch zulaufenden Streifenabschnitt 5 auf. Die Streifensegmente 2 sind mittels eines Flansches 6,miteinander verschraubt. An dem Flansch 6 befindet sich zentral ein Kupplungsstück 7. Es dient zum Verbinden mit anderen Molchkörpern und ist vorzugsweise als Kardangelenk ausgebildet.

Bei der Bewegung eines solchen Sensorträgerkörpers 1 durch eine Rohrleitung treten an den verdrallten Streifensegmenten 2 Rückstellkräfte in Richtung auf eine parallele Ausrichtung zur Mittelachse auf. Ferner hat der Sensorträgerkörper 1 aufgrund seiner Konstruktionsweise eine feste Länge. Bei kleinen Rohrdurchmessern resultiert hieraus eine schlechte Bogenpassierbarkeit. In der Praxis liegen die von einem Molch zu durchlaufenden Krümmungsradien bei bis zu dem 1,5-fachen des Rohrdurchmessers. Die Anwendung des vorbekannten Molches mit vorgegebener Baulänge ist somit auf größere Rohrdurchmesser beschränkt.

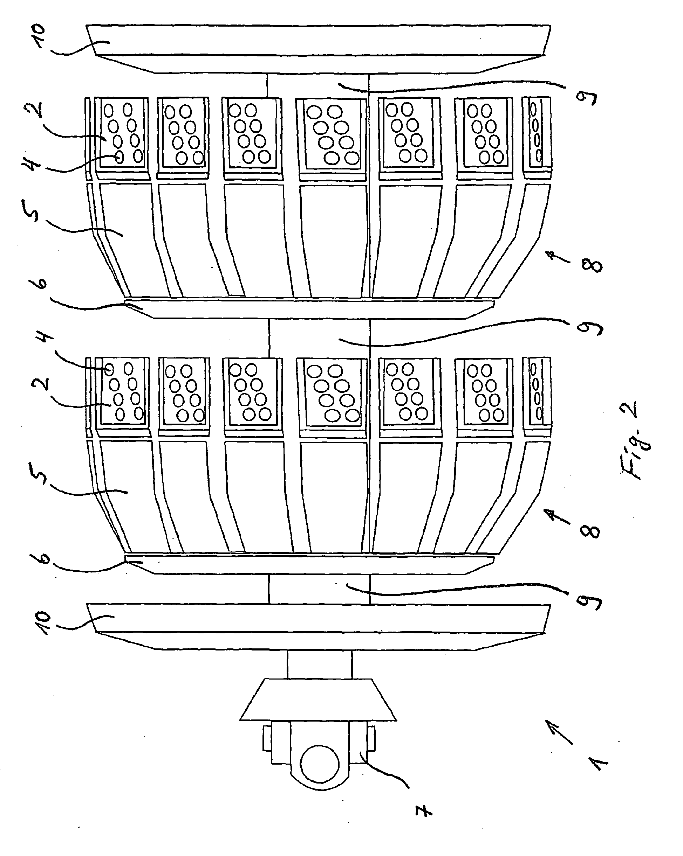

Die Figur 2 zeigt schematisch einen weiteren bekannten Sensorträgerkörper 1, der zwei hintereinander angeordnete Segmentringe 8 aufweist, die aus parallel zur Bewegungsrichtung ausgerichteten Streifensegmenten 2 zusammengesetzt und mit einer starren Achse 9 miteinander verbunden sind. In den Streifensegmenten 2 sind Bohrungen 4 zur Aufnahme von Sensoren angebracht. An den konisch zulaufenden Streifenabschnitten 5 sind die Streifensegmente 2 über einen Flansch 6 verbunden. Die Achse 9 trägt an ihren Enden Manschetten 10 zur Führung und an ihrer Stirnseite ein Kupplungsstück 7 zum Verbinden mit anderen Molchkörpern.

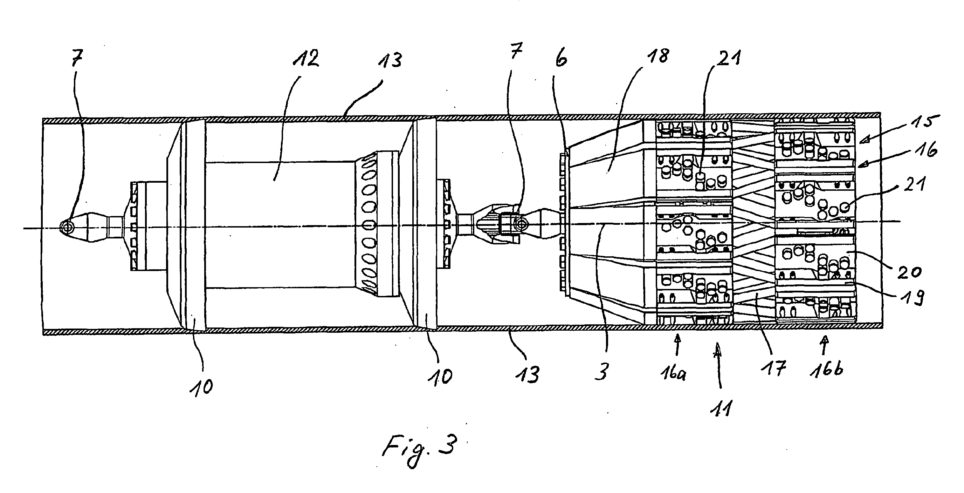

Die Figur 3 zeigt die Seitenansicht einer ersten Ausführungsform eines erfindungsgemäßen Sensorträgerkörpers 11 und einen mit einem Kupplungsstück 7 mit kardanischem Gelenk verbundenen weiteren Molchkörper 12 in einem Längsschnitt einer Rohrleitung 13. Der Sensorträgerkörper 11 ist aus Segmenten 15 zusammengesetzt, die jeweils zwei hintereinander angeordnete parallele Kufenpaare 16 umfassen. Der Molchkörper 12 kann beispielsweise Meßwertaufzeichnungsgeräte oder eine Stromversorgungseinrichtung aufnehmen und ist mit zwei an der Rohrinnenwand anliegenden Manschetten 10 versehen.

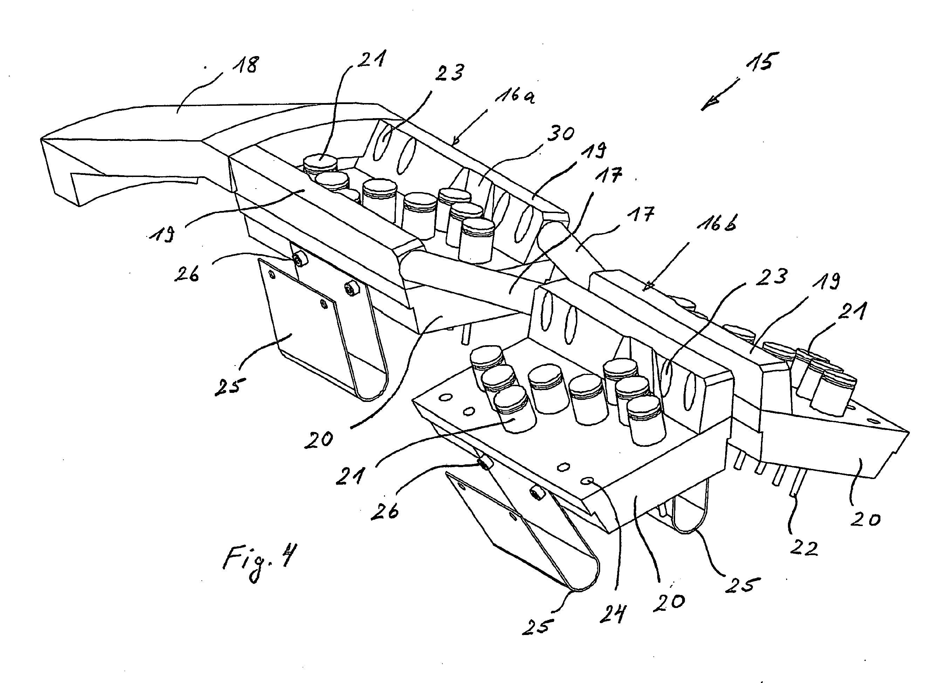

Die Figur 4 zeigt eine perspektivische Ansicht eines erfindungsgemäßen Segmentes 15 zu Fig. 3 mit zwei hintereinander angeordneten Kufenpaaren 16a, 16b, die durch zwei zusammenlaufende elastische Zwischenglieder 17 verbunden sind. An der in Bewegungsrichtung des Molches vorderen Seite ist das Segment 15 in Form eines Abschnittes eines Kegelstumpfmantels als konischer Segmentabschnitt 18 ausgebildet. An seiner Stirnseite ist der konisch zulaufende Segmentabschnitt 18 derart abgewinkelt, daß ein Flansch angebracht werden kann.

Zwischen den Kufen 19 des in Bewegungsrichtung des Molches ersten Kufenpaares 16a ist eine Trägerplatte 20, die mit Sensoren 21 bestückt ist, befestigt. Die Sensoren 21 sind derart auf der Trägerplatte 20 angebracht, daß die Sensoranschlüsse 22 (z.B. Stifte oder Steckverbinder) an der Unterseite der Trägerplatte 20 hervorragen. Je nach Anwendungszweck und Meßgröße können die Sensoren 21 senkrecht oder schräg zur Rohrinnenwand ausgerichtet sein.

Die Kufen 19 mit vorzugsweise trapezförmigem Querschnitt weisen über Öffnungen 23 zugängliche Bohrungen 24 zur Aufnahme von Schrauben auf, mit denen die Trägerplatten 20 an den Kufen 19 befestigt sind.

An den Seitenflächen der Trägerplatten 20 sind U-förmige Federplatten 25 mittels Schrauben 26 befestigt. An den Kufen 19 des zweiten Kufenpaares 16b ist jeweils eine Trägerplatte 20 angeschraubt, die ihrerseits beim Zusammensetzen solcher Segmente 15 zu einem Sensorträgerkörper 11 jeweils an die Kufen 19 von benachbarten Kufenpaaren 16 benachbarter Segmente 15 angeschraubt werden.

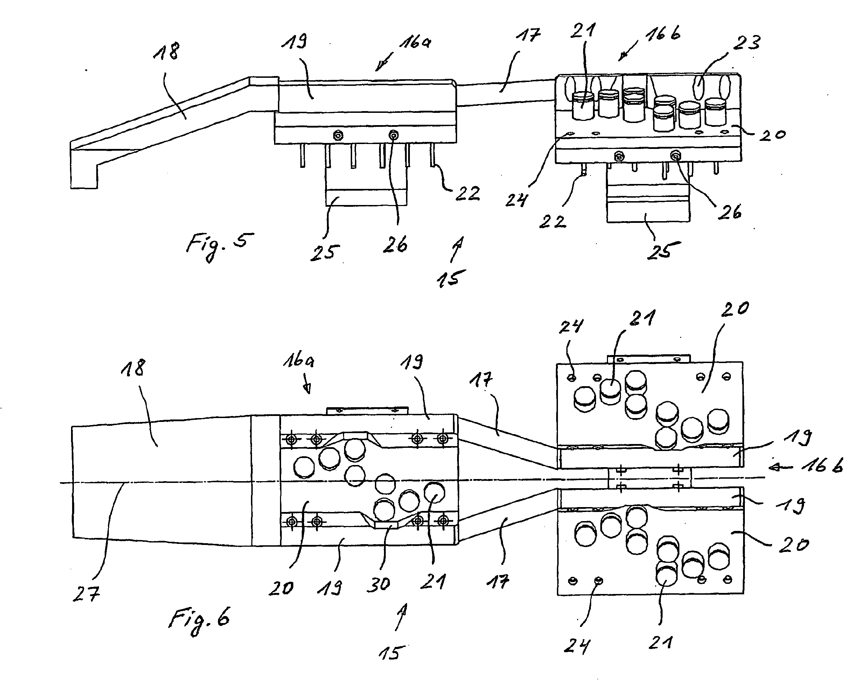

Die Figur 5 zeigt eine Seitenansicht und die Figur 6 eine Aufsicht des Segmentes 15 von Figur 4. Das Segment 15 ist im wesentlichen achsensymmetrisch zur Mittelachse 27.

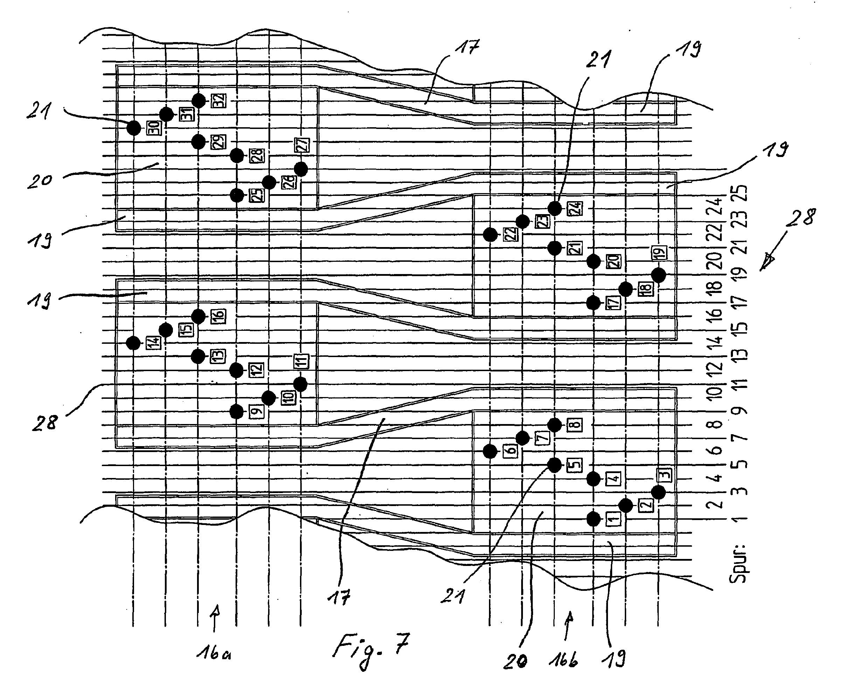

In Figur 7 ist in Form einer schematischen Abwicklung der Verlauf der Bewegungsspuren 28 der Sensoren 21 veranschaulicht, die auf den Trägerplatten 20 zwischen den Kufenpaaren 16 und zwischen benachbarten Kufen 19 benachbarter Kufenpaare 16 angebracht sind. Die Bewegungsspuren 28 sämtlicher Sensoren 21 sind äquidistante parallele Geraden, so daß gewährleistet ist, daß die Wirkflächen der Sensoren 21 die Rohrinnenwand vollständig überstreichen. Dabei sind die Sensoren 21, deren Bewegungsspuren 28 benachbart sind, in der Regel auf einer Trägerplatte 20 angeordnet.

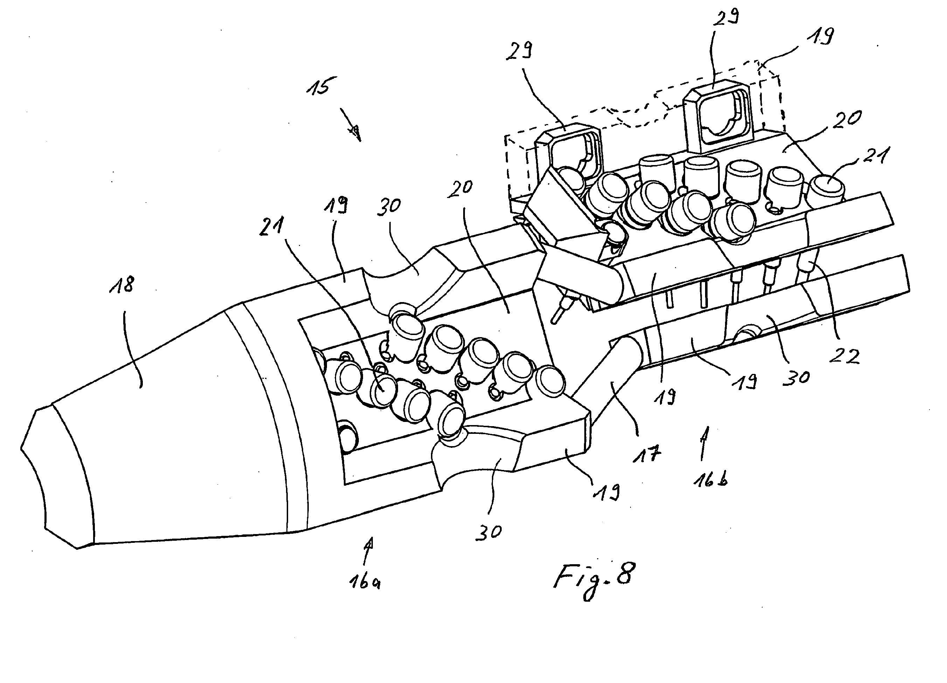

Die Figur 8 zeigt eine perspektivische Ansicht eines erfindungsgemäßen Segmentes 15 mit zwei Kufenpaaren 16. In die Kufen 19 sind jeweils zwei Verschleißschuhe 29, die bündig mit der Oberfläche der Kufen 19 abschließen, eingelassen. In der Figur ist angedeutet, wie die Verschleißschuhe 29 umgossen werden. Ferner sind die Aussparungen 30 in den Kufen 19 dargestellt, die freien Raum für seitlich schallende Sensoren 21 schaffen.

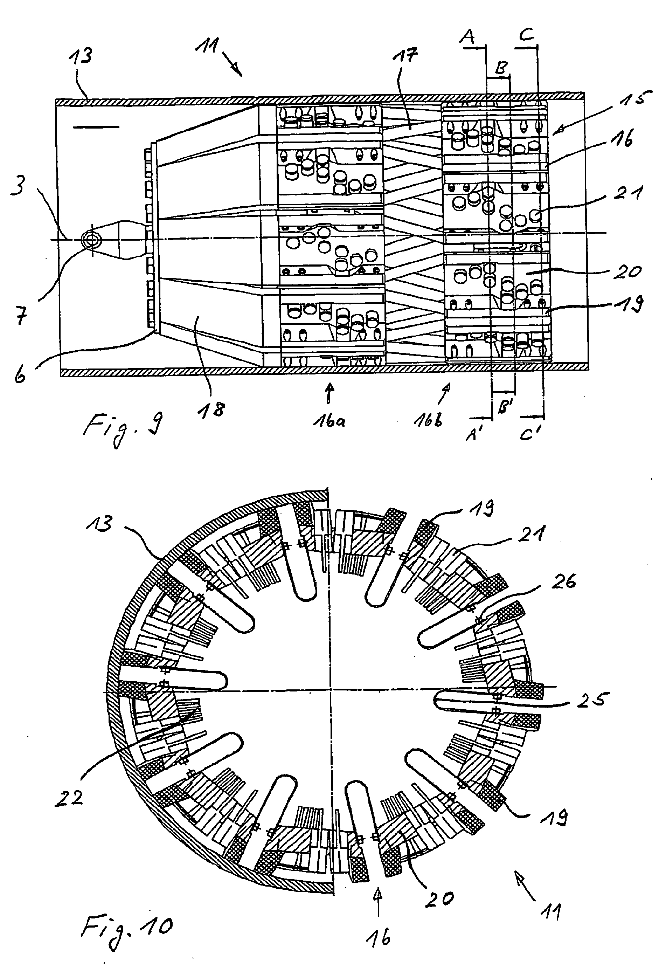

Die Figur 9 zeigt eine Seitenansicht des erfindungsgemäßen Sensorträgerkörpers 11 in einem Längsschnitt einer Rohrleitung 13. Der Sensorträgerkörper 11 ist aus Segmenten 15 zusammengesetzt, die jeweils zwei hintereinander angeordnete Kufenpaare 16 aus parallelen Kufen 19 aufweisen. Die Kufenpaare 16 sind mit elastischen, auseinander laufenden Zwischengliedern 17 verbunden. Die konisch zulaufenden Segmentabschnitte 18 der Segmente 15 bilden einen Kegelstumpf. Sie werden durch einen Flansch 6, der an der Stirnseite mit Flanschmuttern angebracht ist, zusammengehalten. Der Flansch 6 weist in seiner Mitte ein Kupplungsstück 7 auf, mit dem der Sensorträgerkörper 11 an einen weiteren Molchkörper angehängt werden kann.

Die Figur 10 zeigt einen Schnitt A-A' des erfindungsgemäßen Sensorträgerkörpers 11 von Figur 9. In der Figur ist, wie auch in anderen Figuren, der Übersichtlichkeit halber die Rohrleitung 13, deren Innenwand der zylindrischen Hüllfläche des Sensorträgerkörpers 11 entspricht, nur in jeweils einer Hälfte der Figur dargestellt. Die zwischen den Kufenpaaren 16 angebrachten Trägerplatten 20, die mit Sensoren 21 versehen sind, sind zwischen einer Kufe 19 eines Kufenpaares 16 und der benachbarten Kufe 19 eines benachbarten Kufenpaares 16 angebracht. Zwischen den Trägerplatten 20 sind mit Schrauben an den Seitenflächen der Trägerplatten U-förmige Federplatten 25 befestigt, die eine Vorspannung des Sensorträgerkörpers 11 bewirken, so daß die Kufen 19 satt an der Rohrinnenwand der Rohrleitung 13 anliegen.

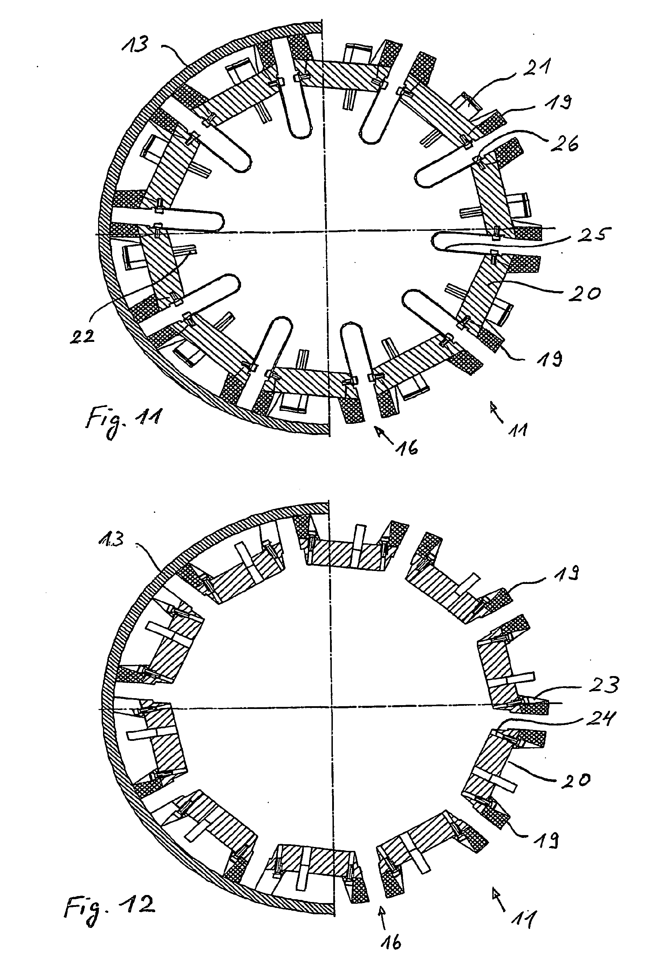

Die Figur 11 zeigt einen Schnitt B-B' und die Figur 12 zeigt einen Schnitt C-C' des erfindungsgemäßen Sensorträgerkörpers 11 von Figur 9.

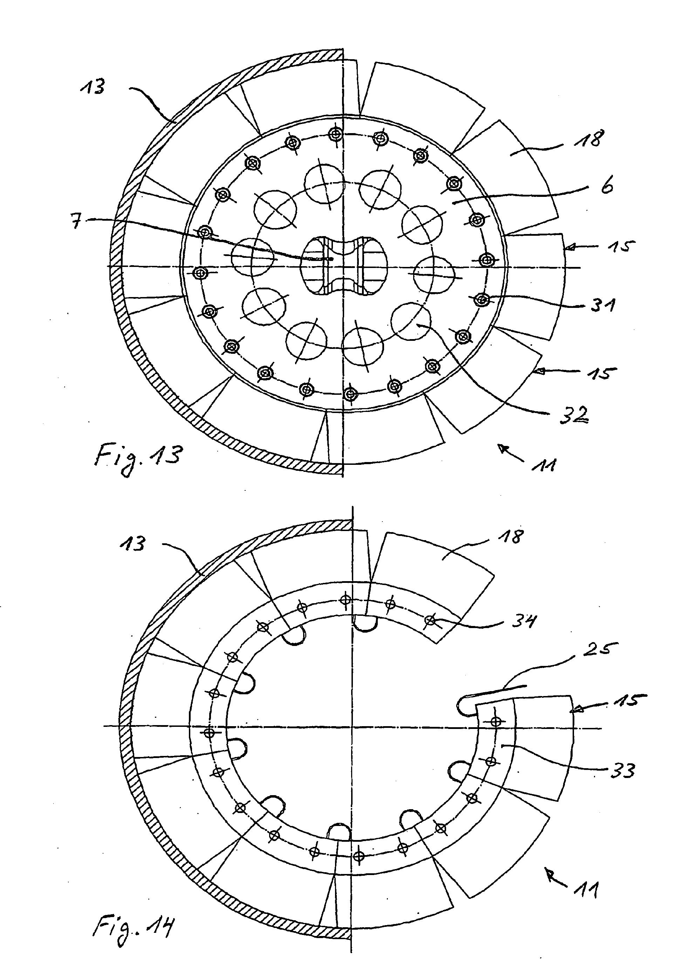

Die Figur 13 zeigt die Stirnseite eines Sensorträgerkörpers 11. Die konisch zulaufenden Segmentabschnitte 18 der Segmente 15 werden durch einen mit Schrauben 31 befestigten kreisförmigen Flansch 6 zusammengehalten. Der kreisförmige Flansch 6 weist Durchlaßöffnungen 32 für die Durchführung von Kabeln auf. In der Mitte des kreisförmigen Flansches 6 ist ein Kupplungsstück 7 angebracht.

Die Figur 14 zeigt die Stirnseite eines Sensorträgerkörpers 11 ohne den an die konisch zulaufenden Segmentabschnitte 18 angebrachten Flansch 6 und unter Weglassung eines Segmentes 15. Die konisch zulaufenden Segmentabschnitte 18 sind ringförmig aneinander gereiht und bilden an ihrer Stirnseite eine ringförmige, ebene Flanschaufnahmefläche 33. In der Flanschaufnahmefläche 33 sind Gewindebohrungen 34 für die Flanschschrauben 31 angebracht.

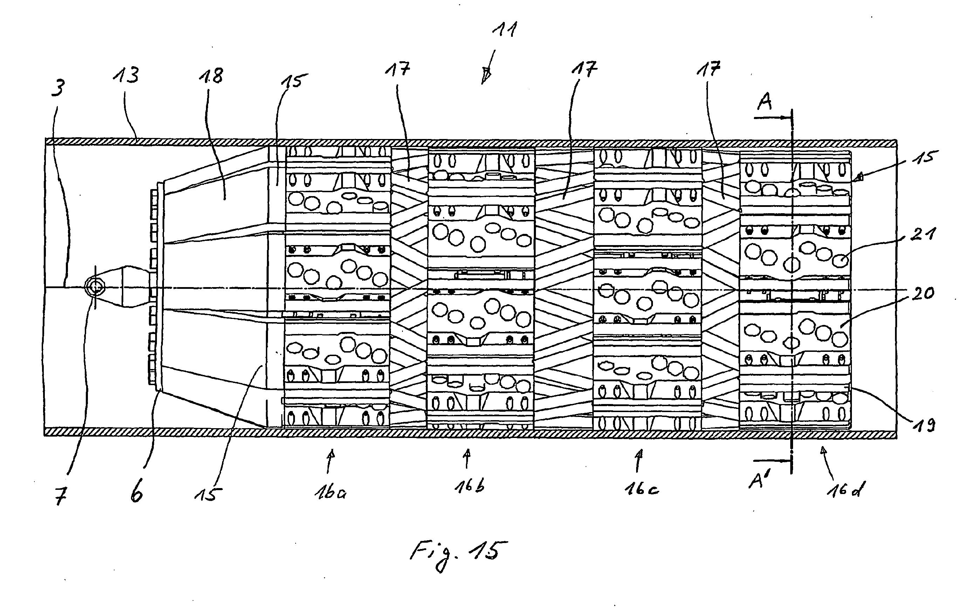

Die Figur 15 zeigt die Seitenansicht eines zweiten Sensorträgerkörpers 11 in einem Längsschnitt einer Rohrleitung 13, wie er vorzugsweise zur Rißprüfung eingesetzt wird. Der Sensorträgerkörper 11 ist aus Segmenten 15 mit jeweils vier Kufenpaaren 16a, 16b, 16c, 16d zusammengesetzt, die mit zusammenlaufenden, parallelen und auseinanderlaufenden elastischen Zwischengliedern 17 verbunden sind.

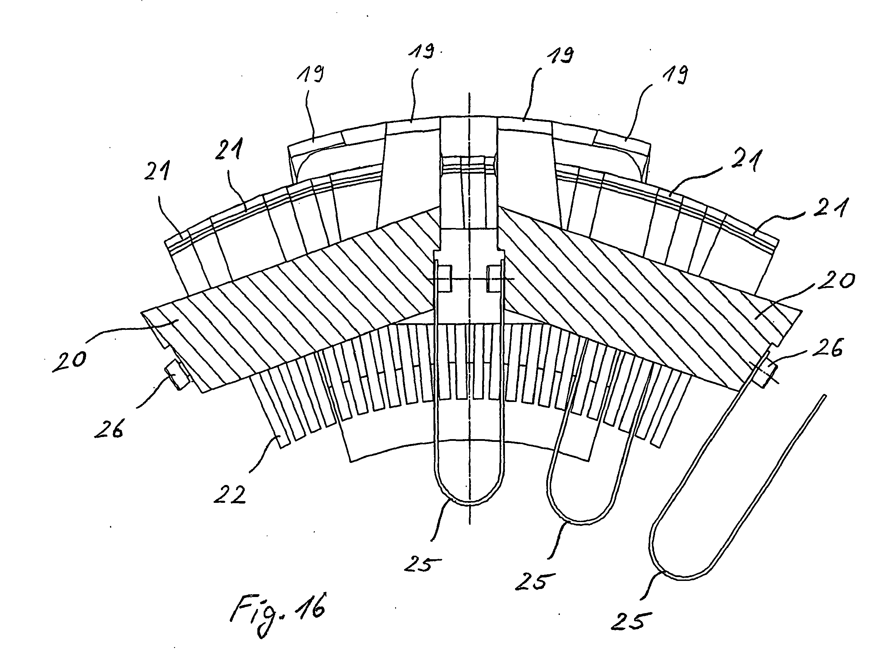

Die Figur 16 zeigt ein Detail eines Schnittes A-A' zu Fig. 15. Auf den mit U-förmigen Federplatten 25 verbundenen Trägerplatten 20 sind Sensoren 21 derart angebracht, daß die Sensoranschlüsse 22 an der Unterseite der Trägerplatte 20 hervorragen.

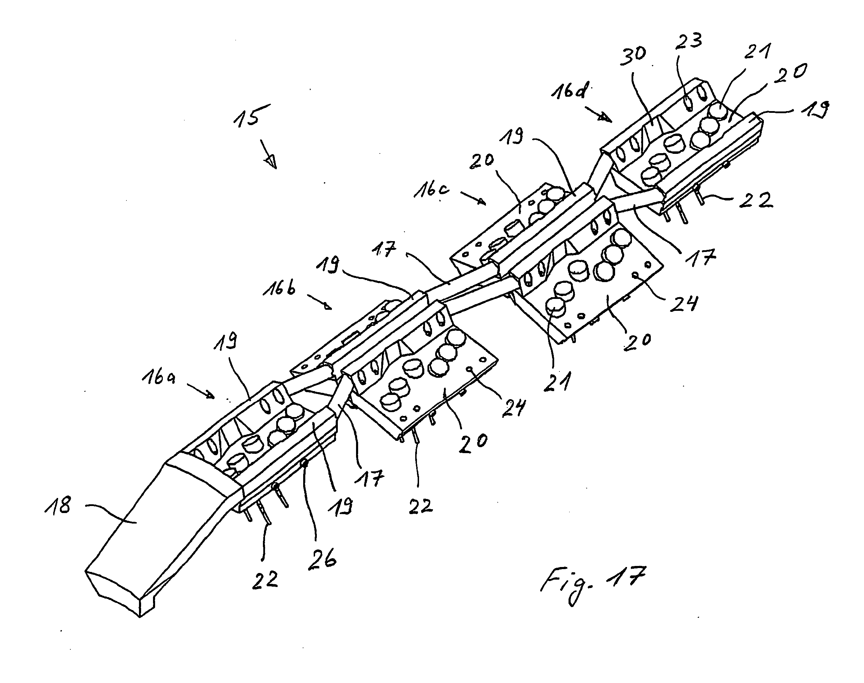

Die Figur 17 zeigt eine perspektivische Ansicht eines erfindungsgemäßen Segmentes 15 aus Fig. 15 mit vier hintereinander angeordneten parallelen Kufenpaaren 16a, 16b, 16c, 16d, wobei zwischen dem ersten Kufenpaar 16a und zwischen dem vierten Kufenpaar 16d Trägerplatten 20 für Sensoren 21 angebracht sind. Bei dem zweiten und dritten Kufenpaar 16b, 16c ist an jeder Kufe 19 jeweils eine Trägerplatte 20 angebracht, die mit einer Kufe eines benachbarten Segmentes verbunden werden kann. Das erste und zweite Kufenpaar 16a, 16b sind mit zusammenlaufenden, das zweite und dritte Kufenpaar 16b, 16c sind mit parallelen und das dritte und vierte Kufenpaar 16c, 16d sind mit auseinanderlaufenden elastischen, gewinkelt an den Kufen 19 angreifenden Zwischengliedern 17 miteinander verbunden.

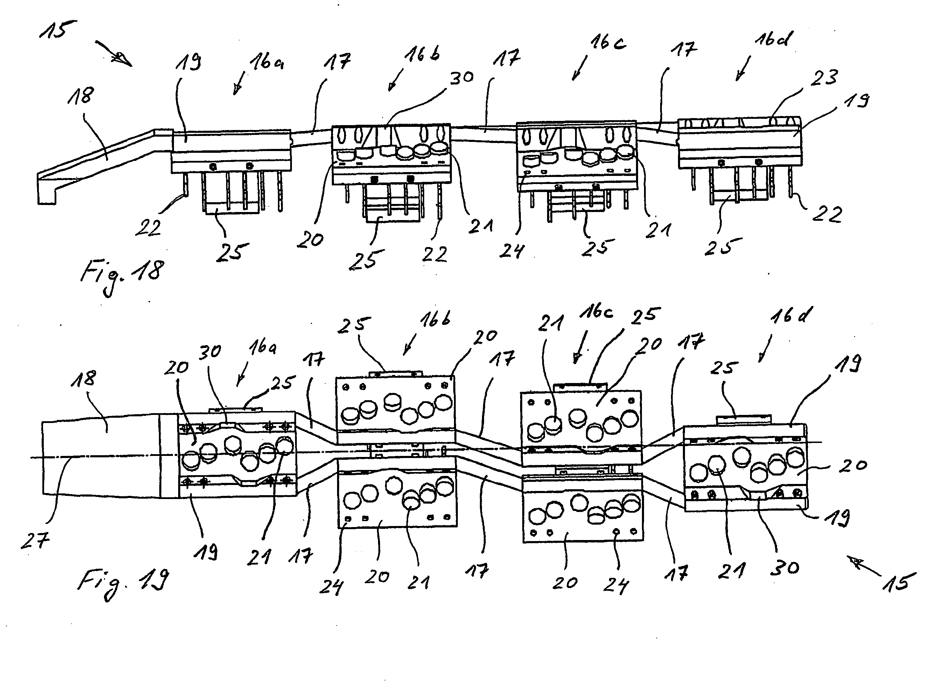

Die Figur 18 zeigt eine Seitenansicht und die Figur 19 eine Aufsicht auf das Segment 15 von Figur 17. Das dritte und vierte Kufenpaar 16c, 16d sind gegenüber der Mittelachse 27 des ersten und zweiten Kufenpaares 16a, 16b seitlich versetzt angeordnet, so daß sich ein Ergänzen nebeneinander liegender Wirkflächen von Sensoren 21 verschiedener Trägerplatten 20 ergibt. Dadurch wird auch eine hohe Meßgenauigkeit, wie sie für die Rißprüfung einer Rohrleitung erforderlich ist, ermöglicht.

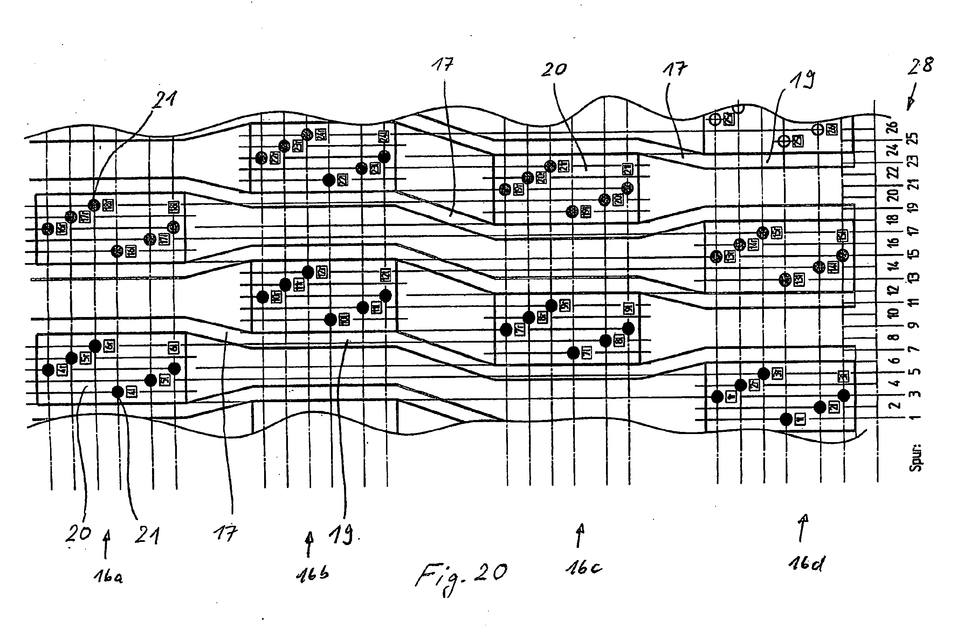

In Figur 20 sind in Form einer schematischen Abwicklung zu Fig. 15 die Bewegungsspuren 28 der Sensoren 21 veranschaulicht. Durch die Anzahl und Anordnung der Sensoren 21 und den Versatz der Trägerplatten 20 in Umfangsrichtung wird erreicht, daß jeweils zwei Sensoren 21 zweier verschiedener Trägerplatten 20 dieselbe Bewegungsspur 28 aufweisen. Die Wirkflächen der Sensoren 21 auf derselben Bewegungsspur 28 können sich überlappen, beispielsweise um eine höhere Meßgenauigkeit zu erreichen. Die Sensoren 21 können aber auch in unterschiedliche Richtungen, z.B. links-rechts, schallen, beispielsweise für die Rißprüfung.

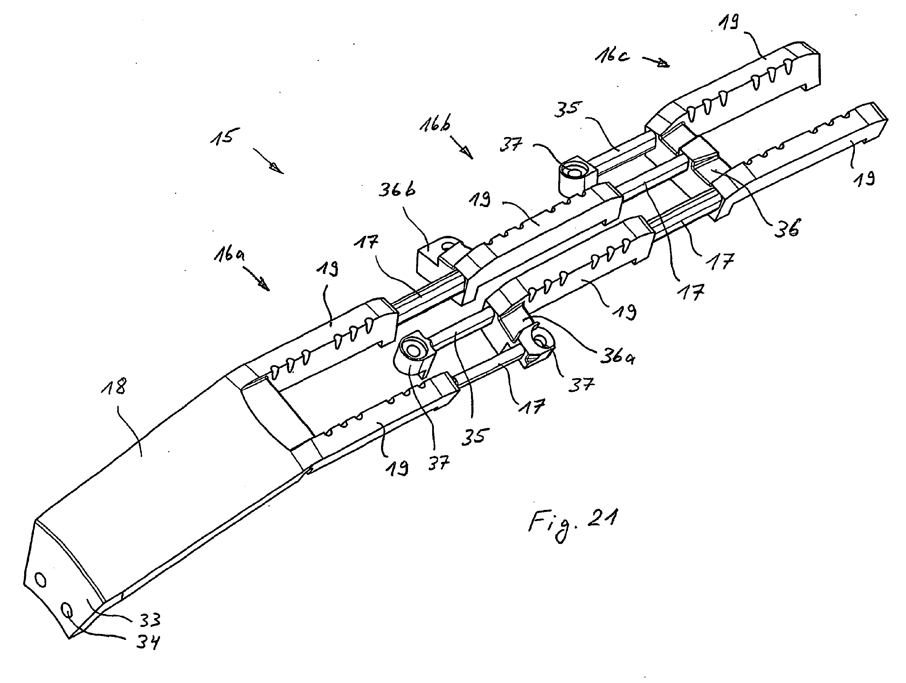

Die Figur 21 zeigt eine weitere vorteilhafte Ausführungsform eines erfindungsgemäßen Segmentes 15, das besonders hinsichtlich der Standfestigkeit gegenüber hohen Zugkräften ausgebildet ist. Es umfaßt drei hintereinander angeordnete Kufenpaare 16a, 16b, 16c mit jeweils zwei parallelen Kufen 19. An seiner Stirnseite ist das Segment 15 konisch zulaufend ausgebildet.

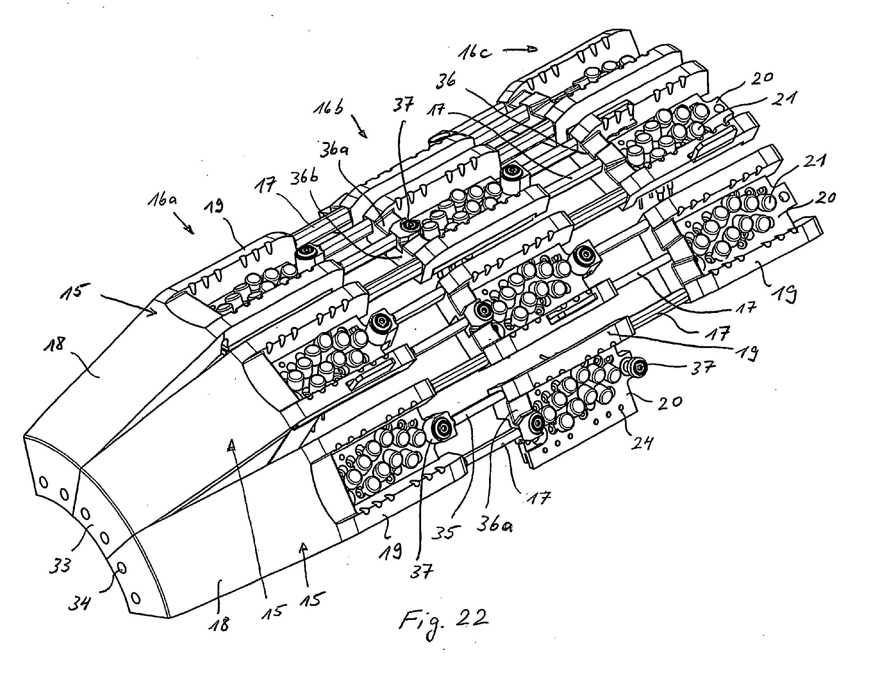

Im Unterschied zu den Ausführungsformen der Fig. 8 und 17 sind die Zwischenglieder 17 zwischen hintereinander angeordneten Kufen 19 in Bewegungsrichtung des Molches orientiert, so daß in ihnen keine Querkräfte auftreten. Ferner sind bei dieser Ausführungsform zusätzliche längsverlaufende Verbindungsglieder 35 vorgesehen, die zwischen Kufen 19 und Trägerplatten 20 (siehe Fig. 22) lastaufnehmend verbunden sind. Das eine Zwischenglied 17 zwischen dem ersten Kufenpaar 16a und dem zweiten Kufenpaar 16b verläuft geradlinig zwischen den hintereinander angeordneten Kufen 19 der Kufenpaare 16a, 16b. Das andere Zwischenglied 17 zwischen dem ersten Kufenpaar 16a und dem zweiten Kufenpaar 16b ist mittels eines Querstegteils 36a, an dem das Zwischenglied 17 mittels einer Hülse 37 angebracht ist, mit einer parallelen, seitlich versetzten Kufe 19 des zweiten Kufenpaares 16b verbunden.

Diese seitlich versetzte Kufe 19 des zweiten Kufenpaares 16b weist in Richtung des konisch zulaufenden Segmentsabschnitts 18 ein Verbindungsglied 35 auf, das mit einer Hülse 37 versehen ist, an die eine zu dem ersten Kufenpaar 16a gehörende Trägerplatte 20 angebracht werden kann. Diese Kufe 19 ist ferner über ein Zwischenglied 17 geradlinig mit einer Kufe 19 des dritten Kufenpaares 16c verbunden. Die andere Kufe 19 des zweiten Kufenpaares 16b weist an ihrer Stirnseite ein Querstegteil 36b auf, das zur Aufnahme einer Hülse 37 eines Zwischenglieds 17 und eines Querstegteils 36a eines benachbarten Segmentes 15 geeignet ist. Sie ist geradlinig durch ein Zwischenglied 17 mit einem Quersteg 36, der zwischen den Kufen 17 des dritten Kufenpaares 16c an deren Stirnseite angebracht ist, verbunden.

Korrespondierende, zusammengesetzte Querstegteile 36a, 36b entsprechen in ihrer Funktion einem Quersteg 36. Die Kufe 19 des dritten Kufenpaares 16c, die nicht mit einer Kufe 19 des zweiten Kufenpaares 16b durch ein Zwischenglied 17 geradlinig verbunden ist, weist an ihrer Stirnseite ein Verbindungsglied 35 auf, das mit einer Hülse 37 versehen ist, an die eine Trägerplatte 20 angebracht werden kann.

Wird an dem ersten Kufenpaar 16a und dem dritten Kufenpaar 16c jeweils eine Trägerplatte 20 befestigt, verläuft beim Ziehen des Sensorträgerkörpers durch eine Rohrleitung ein geradliniger Kraftfluß von der einen Kufe 19 des ersten Kufenpaares 16a bis zum Quersteg 36 des dritten Kufenpaares 16c und ein weiterer geradliniger Kraftfluß von der Trägerplatte 20 zwischen dem ersten Kufenpaar 16a über das Verbindungsglied 35, das mit einer Hülse 37 an der Trägerplatte 20 befestigt ist und das die Trägerplatte 20 mit der Kufe 19 des zweiten Kufenpaares 16b verbindet, bis zu der einen Kufe 19 des dritten Kufenpaares 16c. Entsprechendes gilt für die Trägerplatte 20, die an dem zweiten Kufenpaar 16b befestigt ist und die Verbindung zu einem benachbarten Segment herstellt.

Dadurch erreichen das Segment 15 und der aus solchen Segmenten zusammengesetzte Sensorträgerkörper eine sehr hohe Stabilität und auch bei hohen Zugkräften eine hohe Spurtreue der Sensoren.

Die Figur 22 zeigt in einem Ausschnitt eines Sensorträgerkörpers drei zusammengesetzte Segmente 15 gemäß Fig. 21, bei denen zwischen dem ersten Kufenpaar 16a und dem dritten Kufenpaar 16c jeweils eine Trägerplatte 20 befestigt ist. Außerdem ist zwischen jeder Kufe 19 des zweiten Kufenpaares 16b eines Segmentes 15 und der benachbarten Kufe 19 des zweiten Kufenpaares 16b des benachbarten Segmentes 15 ebenfalls eine Trägerplatte 20 befestigt. Man erkennt hier den kompakten und hoch stabilen Aufbau, bei dem dennoch eine Vielzahl von Sensoren 21, auch mit überlappenden Bewegungsspuren, insbesondere von unterschiedlichen Trägerplatten 20, realisierbar ist. Die U-förmigen Federplatten zwischen benachbarten Kufen 19 sind der Übersichtlichkeit halber hier nicht dargestellt.

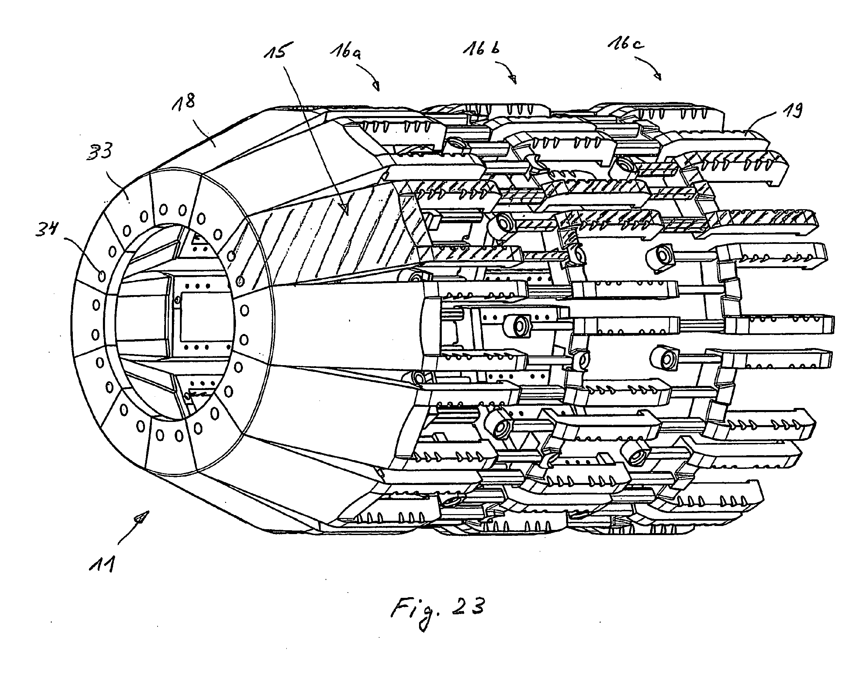

Die Figur 23 zeigt einen Sensorträgerkörper 11, der aus Segmenten 15 nach Figur 21 zusammengesetzt ist. Die Trägerplatten 20 sind in dieser Darstellung der Übersichtlichkeit halber nicht eingezeichnet. Ferner ist zur Verdeutlichung der Struktur und des modularen Aufbaus aus gleichartigen Segmenten 15 gemäß Fig. 21 ein Segment 15 durch eine Schraffur gekennzeichnet.

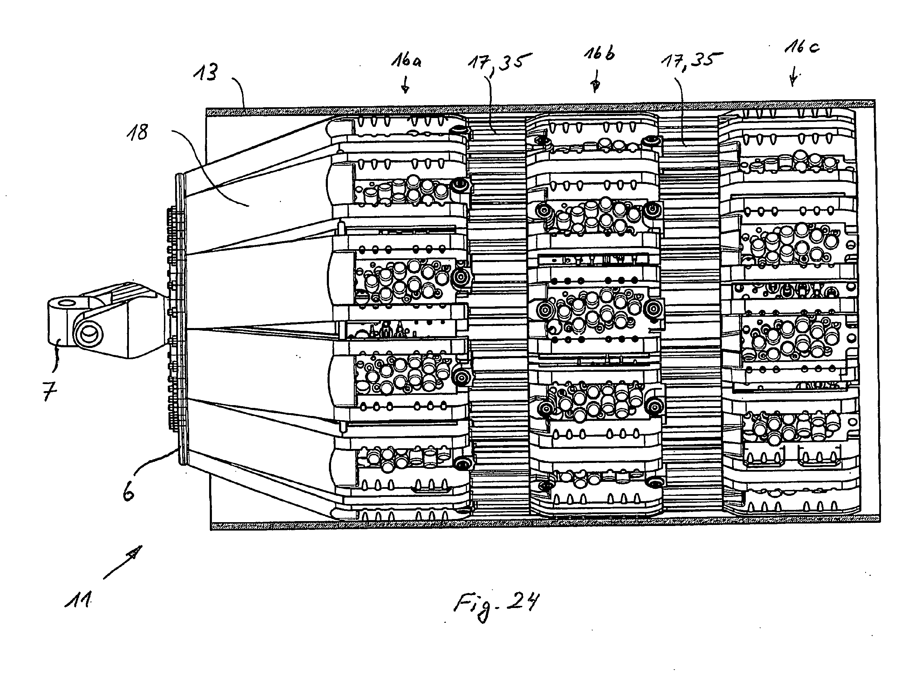

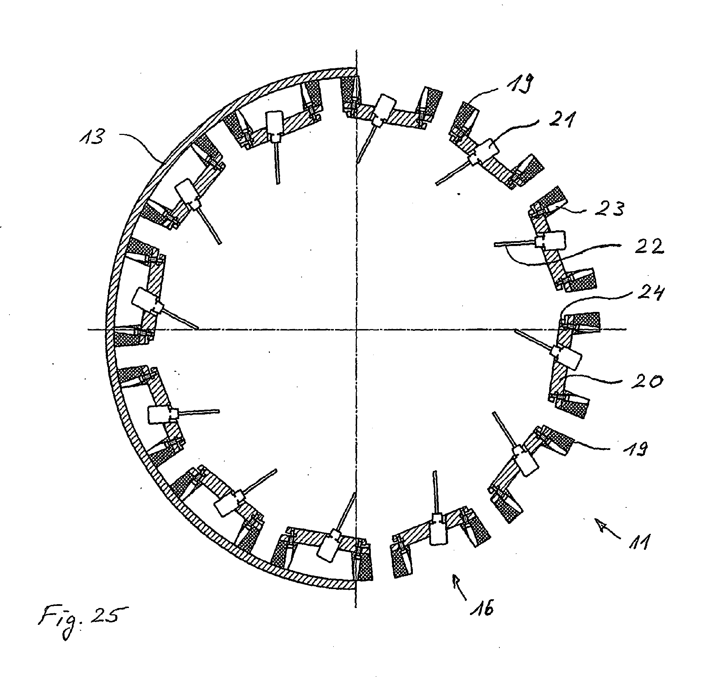

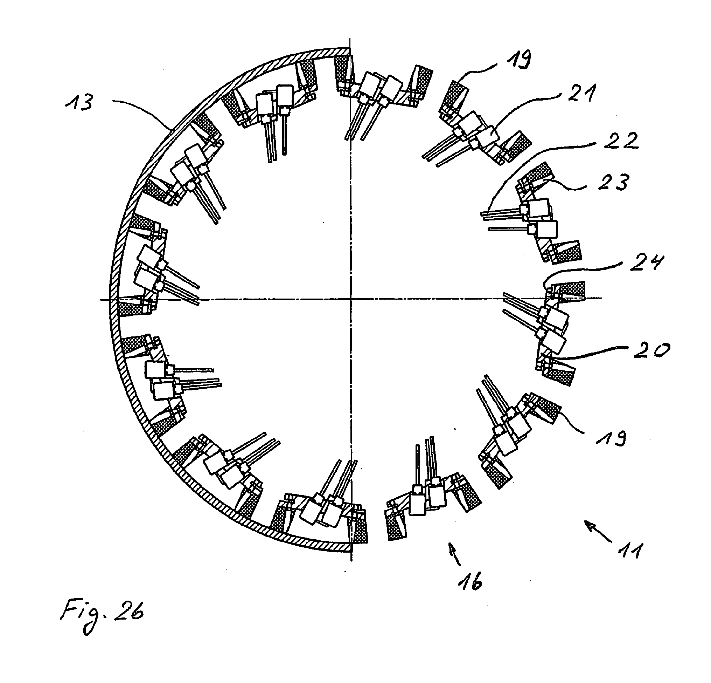

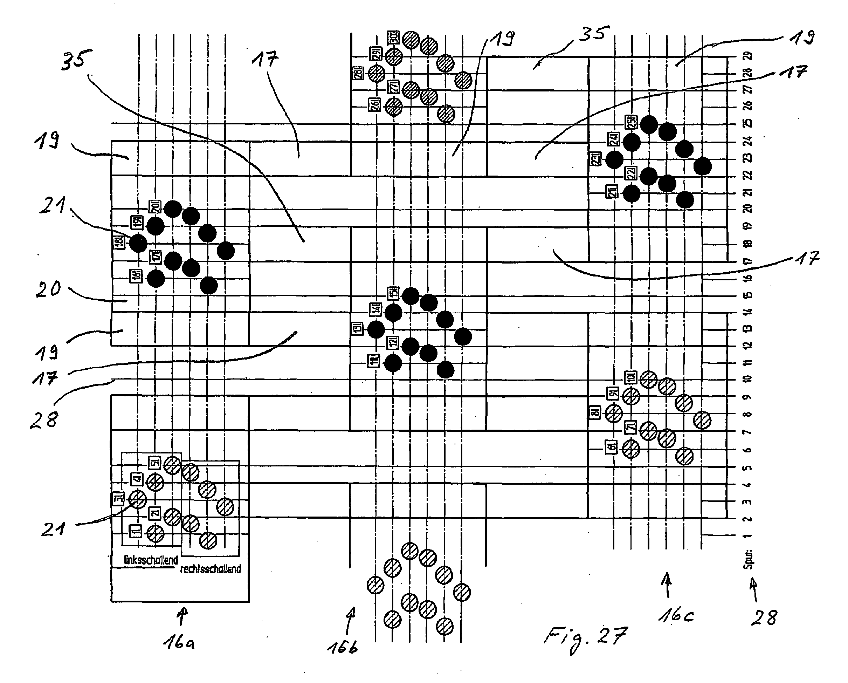

Die Figuren 24 bis 27 sind weitere Darstellungen des Sensorträgerkörpers 11 gemäß Figur 23. Die Figur 24 entspricht der Figur 9, die Figuren 25 und 26 den Figuren 10 bis 12, wobei die U-förmigen Federplatten nicht dargestellt wurden, und die Figur 27 der Figur 20.

### Bezugszeichenliste

- 1: Bekannter Sensorträgerkörper
- 2: Streifensegment
- 3: Mittelachse des Sensorträgerkörpers
- 4: Bohrung für Sensor
- 5: konisch zulaufender Streifenabschnitt
- 6: Flansch
- 7: Kupplungsstück
- 8: Segmentring
- 9: starre Achse
- 10: Manschette
- 11: erfindungsgemäßer
- 12: Molchkörper
- 13: Rohrleitung
- 15: erfindungsgemäßes Segment
- 16: paralleles Kufenpaar
- 16a: erstes Kufenpaar
- 16b: zweites Kufenpaar
- 16c: drittes Kufenpaar
- 16d: viertes Kufenpaar
- 17: elastisches Zwischenglied
- 18: konisch zulaufender Segmentabschnitt
- 19: Kufe
- 20: Trägerplatte
- 21: Sensor
- 22: Sensoranschluß
- 23: Öffnung in einer Kufe
- 24: Gewindebohrung in einer Trägerplatte
- 25: U-förmige Federplatte
- 26: Befestigungsschraube für eine U-förmige Federplatte
- 27: Mittelachse eines Kufenpaares
- 28: Bewegungsspur eines Sensors
- 29: Verschleißschuh
- 30: Aussparung
- 31: Flanschschraube
- 32: Durchlaßöffnung
- 33: Flanschaufnahmefläche
- 34: Gewindebohrung für Flanschschraube
- 35: Verbindungsglied
- 36: Quersteg
- 36a: erstes Querstegteil
- 36b: zweites Querstegteil
- 37: Hülse

## Patentansprüche

1. Segment (15) für einen aus solchen Segmenten (15) zusammengesetzten, einen Hohlkörper mit zylindrischer Hüllfläche bildenden Sensorträgerkörper (11) eines Molches, der zur Rohrleitungsprüfung durch eine Rohrleitung (13) bewegbar ist, wobei der Sensorträgerkörper (11) mit zur Durchführung der Rohrleitungsprüfung erforderlichen Sensoren (21) bestückt ist,
wobei das Segment (15) mindestens zwei Kufenpaare (16) umfaßt, die jeweils aus zwei im wesentlich zueinander parallelen Kufen (19) bestehen, wobei die Kufen (19) in Bewegungsrichtung des Molches orientiert sind, zwischen den Kufen (19) mindestens eines Kufenpaares (16) eine Trägerplatte (20) für Sensoren (21) angeordnet und mit den Kufen (19) des Kufenpaares (16) verbunden ist und das Segment (15) derart ausgebildet ist, daß es mit Hilfe einer die Segmente (15) verbindenden Verbindungsvorrichtung mit weiteren solchen Segmenten (15) zu dem Hohlkörper mit zylindrischer Hüllfläche verbindbar ist,
**dadurch gekennzeichnet, daß** die Kufenpaare (16) des Segmentes (15) entgegen der Bewegungsrichtung des Molches aufeinander folgend angeordnet sind und hintereinander liegende Kufen (19) mit Verbindungselementen elastisch miteinander verbunden sind.

2. Segment (15) nach Anspruch 1, **dadurch gekennzeichnet, daß** mindestens eine weitere Trägerplatte (20) für Sensoren (21) zwischen einer Kufe (19) eines Segmentes (15) und einer Kufe (19) eines benachbarten Segmentes (15) anbringbar ist.

3. Segment (15) nach Anspruch 1 oder 2, **dadurch gekennzeichnet, daß** die Verbindungsvorrichtung, mit deren Hilfe es mit weiteren solchen Segmenten (15) zu einem Hohlkörper mit zylindrischer Hüllfläche verbindbar ist, an der in Bewegungsrichtung des Molches liegenden Stirnseite des Segmentes (15) anbringbar ist.

4. Segment (15) nach einem der vorhergehenden Ansprüche, **dadurch gekennzeichnet, daß** die Anzahl seiner Kufenpaare (16) aus jeweils zwei zueinander parallelen Kufen (19) zwischen 2 und 10, bevorzugt zwischen 2 und 4 beträgt.

5. Segment (15) nach einem der vorhergehenden Ansprüche, **dadurch gekennzeichnet, daß** es an seiner in Bewegungsrichtung eines Molches liegenden Stirnseite einen konisch zulaufenden Segmentabschnitt (18) aufweist, so daß der aus solchen Segmenten (15) zusammengesetzte Hohlkörper an seiner in Bewegungsrichtung des Molches liegenden Stirnseite kegelstumpfförmig ausgebildet ist.

6. Segment (15) nach einem der vorhergehenden Ansprüche, **dadurch gekennzeichnet, daß** zwischen aufeinander folgenden Kufen (19) eines Segmentes (15) Verbindungselemente als parallele, elastische, aufeinander folgende Kufen (19) verbindende Zwischenglieder (17) ausgebildet sind.

7. Segment (15) nach einem der vorhergehenden Ansprüche, **dadurch gekennzeichnet, daß** zwischen aufeinander folgenden Kufen (19) eines Segmentes (15) Verbindungselemente als paarweise auseinander oder zueinander verlaufende, elastische, aufeinander folgende Kufen (19) verbindende Zwischenglieder (17) ausgebildet sind.

8. Segment (15) nach einem der vorhergehenden Ansprüche, **dadurch gekennzeichnet, daß** es zwischen mindestens einem Kufenpaar (16) an seiner in Bewegungsrichtung des Molches vorderen Seite ein die Kufen (19) des Kuvenpaares (16) verbindenden Quersteg (36, 36a, 36b) aufweist.

9. Segment (15) nach einem der vorhergehenden Ansprüche, **dadurch gekennzeichnet, daß** es zwischen der Trägerplatte (20), die zwischen einem Kufenpaar (16) angebracht ist und einer Kufe (19) eines entgegen der Bewegungsrichtung des Molches nachfolgenden Kufenpaares (16) ein die Trägerplatte (20) und die Kufe (19) verbindendes Verbindungsglied (35) aufweist.

10. Segment nach Anspruch 9, **dadurch gekennzeichnet, daß** das Verbindungsglied (35) in Längsrichtung der Kufe (19) angeordnet ist.

11. Segment (15) nach Anspruch 9 oder 10, **dadurch gekennzeichnet, daß** das Verbindungsglied (35) zwischen einer Trägerplatte (20) und einer Kufe (19) mit einer Hülse (37) an der Trägerplatte (20) anbringbar ist.

12. Segment (15) nach einem der Ansprüche 8 bis 11, **dadurch gekennzeichnet, daß** es ein Zwischenglied (17) zwischen aufeinander folgenden Kufen (19) aufweist, das an einem Ende mit einem Querstegteil (36a) an einem nachfolgenden Kufenpaar (16) verbunden ist.

13. Segment (15) nach einem der vorhergehenden Ansprüche, **dadurch gekennzeichnet, daß** es ein Querstegteil (36a, 36b) aufweist, mit dem es mit einem benachbarten Segment (15) verbindbar ist.

14. Segment (15) nach Anspruch 13, **dadurch gekennzeichnet, daß** das Querstegteil (36a, 36b) derart ausgebildet ist, daß es mit einem korrespondierenden Querstegteil (36b, 36a) eines benachbarten Segments (15) verbindbar ist.

15. Segment (15) nach einem der vorhergehenden Ansprüche, **dadurch gekennzeichnet, daß** die Flächen der Oberseiten der Kufen (19) quer zur Längsrichtung der Kufen (19) gewölbt sind.

16. Segment (15) nach einem der vorhergehenden Ansprüche, **dadurch gekennzeichnet, daß** in den Kufen (19) metallene Verschleißschuhe (29) eingelassen sind, die bündig mit der Oberfläche der Oberseite der Kufen (19) abschließen.

17. Segment (15) nach einem der vorhergehenden Ansprüche, **dadurch gekennzeichnet, daß** die Kufen (19) Aussparungen (30) aufweisen.

18. Segment (15) nach einem der vorhergehenden Ansprüche, **dadurch gekennzeichnet, daß** es derart ausgebildet ist, daß die Trägerplatten (20) an der Unterseite der Kufen (19) anbringbar sind.

19. Segment nach einem der vorhergehenden Ansprüche, **dadurch gekennzeichnet, daß** die Kufen (19) aus elastischem Werkstoff bestehen.

20. Segment (15) nach einem der vorhergehenden Ansprüche, **dadurch gekennzeichnet, daß** das Segment (15) insgesamt oder im wesentlichen als einstückiges Teil ausgebildet ist, das eines oder mehrere folgender Komponenten umfaßt: Kufen (19), Verbindungsglieder (35), Zwischenglieder (17), konisch zulaufender Segmentabschnitt (18), Quersteg (36), Querstegteil (36a, 36b).

21. Sensorträgerkörper (11) in Form eines zylindrischen Hohlkörpers für einen Molch, der aus mehreren Segmenten (15) nach einem der vorhergehenden Ansprüche gebildet ist.

22. Sensorträgerkörper (11) nach Anspruch 21, **dadurch gekennzeichnet, daß** er eine Verbindungsvorrichtung umfaßt, mit der die Segmente (15) zu einem Hohlkörper mit zylindrischer Hüllfläche verbunden sind.

23. Sensorträgerkörper (11) nach Anspruch 22, **dadurch gekennzeichnet, daß** die Verbindungsvorrichtung U-förmige Federplatten (25) umfaßt, die zwischen benachbarten Segmenten (15) angebracht sind.

24. Molch, **dadurch gekennzeichnet, daß** er Segmente (15) nach einem der Ansprüche 1 bis 20 oder einen Sensorträgerkörper (11) nach einem der Ansprüche 21 bis 23 umfaßt.

## Claims

1. Segment (15) of a sensor-supporting element (11) of a scraper-type device, in which the sensor-supporting element (11) is assembled from such segments (15) and forms a hollow body with a cylindrical envelope surface and the scraper-type device can be moved through a pipeline (13) for the purpose of pipeline testing, whereby the sensor-supporting element (11) is fitted with sensors (21) required for the performance of the pipeline testing,
wherein the segment (15) comprises at least two pairs of runners (16), which each consist of essentially parallel runners (19), whereby the runners (19) are oriented in the direction of motion of the scraper-type device, a sensor plate (20) for sensors (21) is arranged between the runners (19) of at least one pair of runners (16) and connected to the runners (19) of the pair of runners (16), and the segment (15) is provided such that it can be connected to additional such segments (15) by means of a connecting device connecting the segments (15) so as to form the hollow body with a cylindrical envelope surface,
**characterized in that** the pairs of runners (16) of the segment (15) are arranged behind each other (sequentially) against the direction of motion of the scraper-type device and sequentially arranged runners (19) are connected elastically to each other by means of connecting elements.

2. Segment (15) according to claim 1, **characterized in that** at least one additional support plate (20) for sensors (21) can be attached between one runner (19) of one segment (15) and one runner (19) of a neighboring segment (15).

3. Segment (15) according to claim 1 or 2, **characterized in that** the connecting device, which can be used to connect the segment to other such segments (15) to form a hollow body with a cylindrical envelope surface, can be attached to the front side of the segment (15) facing in the direction of motion of the scraper-type device.

4. Segment (15) according to any one of the preceding claims, **characterized in that** the number of its pairs of runners (16) consisting of two parallel runners (19) each is between 2 and 10, preferably between 2 and 4.

5. Segment (15) according to any one of the preceding claims, **characterized in that** it comprises a conical-tapering segment section (18) at its front side facing in the direction of motion of a scraper-type device such that the hollow body assembled from such segments (15) is provided to be truncated cone-shaped at its front side facing in the direction of motion of the scraper-type device.

6. Segment (15) according to any one of the preceding claims, **characterized in that** connecting elements are provided between sequential runners (19) of a segment (15) in the form of parallel elastic interim segments (17) connecting sequential runners (19).

7. Segment (15) according to any one of the preceding claims, **characterized in that** connecting elements are provided between sequential runners (19) of a segment (15) in the form of twindiverging or -converging elastic interim segments (17) connecting sequential runners (19).

8. Segment (15) according to any one of the preceding claims, **characterized in that** it comprises at its front side facing in the direction of motion of the scraper-type device and between at least one pair of runners (16) a transverse fin (36, 36a, 36b) connecting the runners (19) of the pair of runners (16).

9. Segment (15) according to any one of the preceding claims, **characterized in that** it comprises between the support plate (20), which is attached between a pair of runners (16) and a runner (19) of a trailing pair of runners (16) with regard to the motion of direction of the scraper-type device, a connecting element (35) connecting the support plate (20) and the runner (19).

10. Segment according to claim 9, **characterized in that** the connecting element (35) is arranged along the longitudinal direction of the runner (19).

11. Segment (15) according to claim 9 or 10, **characterized in that** the connecting element (35) between a support plate (20) and a runner (19) can be attached to the support plate (20) by means of a sleeve (37).

12. Segment (15) according to one of the claims 8 to 11, **characterized in that** it comprises between sequential runners (19) an interim element (17), one end of which is connected to a trailing pair of runners (16) by means of a transverse fin part (36a).

13. Segment (15) according to any one of the preceding claims, **characterized in that** it comprises a transverse fin part (36a, 36b), which allows it to be connected to a neighboring segment (15).

14. Segment (15) according to claim 13, **characterized in that** the transverse fin part (36a, 36b) is provided such that it can be connected to a corresponding transverse fin part (36b, 36a) of a neighboring segment (15).

15. Segment (15) according to any one of the preceding claims, **characterized in that** the surfaces of the upper sides of the runners (19) are arched transverse to the longitudinal direction of the runners (19).

16. Segment (15) according to any one of the preceding claims, **characterized in that** metallic abrasion-resistant shoes (29) ending flush with the surface of the upper side of the runners (19) are incorporated into the runners (19).

17. Segment (15) according to any one of the preceding claims, **characterized in that** the runners (19) comprise recesses (30).

18. Segment (15) according to any one of the preceding claims, **characterized in that** it is provided such that the support plates (20) can be attached to the underside of the runners (19).

19. Segment according to any one of the preceding claims, **characterized in that** the runners (19) consist of an elastic material.

20. Segment (15) according to any one of the preceding claims, **characterized in that** the segment (15) is provided fully or essentially in the form of a single part comprising one or several of the following components: runners (19), connecting elements (35), interim segments (17), conical-tapering segment section (18), transverse fin (36), transverse fin part (36a, 36b).

21. Sensor-supporting element (11), provided in the form of a cylindrical hollow body, of a scraper-type element, which is assembled from multiple segments (15) according to any one of the preceding claims.

22. Sensor-supporting element (11) according to claim 21, **characterized in that** it comprises a connecting device connecting the segments (15) to form a hollow body with a cylindrical envelope surface.

23. Sensor-supporting element (11) according to claim 22, **characterized in that** the connecting device comprises U-shaped spring plates (25), which are attached between neighboring segments (15).

24. Scraper-type element, **characterized in that** it comprises segments (15) according to any one of the claims 1 to 20 or a sensor-supporting element (11) according to any one of the claims 21 to 23.

## Revendications

1. Segment (15) destiné à un corps (11) de support de capteurs composé de tels segments (15), matérialisant un corps creux à surface enveloppante cylindrique, et faisant partie d'un écouvillon pouvant être mis en mouvement dans un conduit tubulaire (13), en vue du contrôle de conduits tubulaires, ledit corps (11) de support de capteurs étant garni de capteurs (21) nécessaires à l'exécution du contrôle des conduits tubulaires, ledit segment (15) incluant au moins deux paires (16) de patins respectivement constituées de deux patins (19) sensiblement parallèles l'un à l'autre, lesdits patins (19) étant orientés dans la direction du mouvement de l'écouvillon ; une platine (20) de support de capteurs (21) étant interposée entre les patins (19) d'au moins une paire (16) de patins, et étant reliée auxdits patins (19) de ladite paire (16) de patins ; et ledit segment (15) étant réalisé de façon telle qu'il puisse être relié à d'autres segments (15) de ce type, à l'aide d'un dispositif de liaison solidarisant lesdits segments (15), pour obtenir le corps creux à surface enveloppante cylindrique,
**caractérisé par le fait que**
les paires (16) de patins du segment (15) sont agencées en succession mutuelle en sens inverse de la direction du mouvement de l'écouvillon, et des patins (19) se succédant sont reliés élastiquement les uns aux autres par des éléments de solidarisation.

2. Segment (15) selon la revendication 1, **caractérisé par le fait qu'**au moins une platine supplémentaire (20) de support de capteurs peut être mise en place entre un patin (19) d'un segment (15), et un patin (19) d'un segment (15) voisin.

3. Segment (15) selon la revendication 1 ou 2, **caractérisé par le fait que** le dispositif de solidarisation, à l'aide duquel ledit segment peut être relié à d'autres segments (15) de ce type en vue d'obtenir un corps creux à surface enveloppante cylindrique, peut être implanté à la face frontale dudit segment (15) qui est située dans la direction du mouvement de l'écouvillon.

4. Segment (15) selon l'une des revendications précédentes, **caractérisé par le fait que** le nombre de ses paires (16) de patins, respectivement constituées de deux patins (19) parallèles l'un à l'autre, est compris entre 2 et 10, de préférence entre 2 et 4.

5. Segment (15) selon l'une des revendications précédentes, **caractérisé par le fait qu'**il comporte une région (18) s'achevant coniquement, à sa face frontale située dans la direction du mouvement d'un écouvillon, si bien que le corps creux, composé de tels segments (15), est de réalisation tronconique à sa face frontale située dans la direction du mouvement de l'écouvillon.

6. Segment (15) selon l'une des revendications précédentes, **caractérisé par le fait que** des éléments de solidarisation, situés entre des patins (19) d'un segment (15) en succession mutuelle, sont réalisés sous la forme de pièces intercalaires (17) parallèles et élastiques, reliant des patins (19) se succédant mutuellement.

7. Segment (15) selon l'une des revendications précédentes, **caractérisé par le fait que** des éléments de solidarisation, situés entre des patins (19) d'un segment (15) en succession mutuelle, sont réalisés sous la forme de pièces intercalaires élastiques (17) divergeant les unes des autres ou convergeant les unes vers les autres, par paires, et reliant des patins (19) se succédant mutuellement.

8. Segment (15) selon l'une des revendications précédentes, **caractérisé par le fait qu'**il présente entre au moins une paire (16) de patins, à sa face antérieure dans la direction du mouvement de l'écouvillon, une membrure transversale (36, 36a, 36b) solidarisant les patins (19) de ladite paire (16) de patins.

9. Segment (15) selon l'une des revendications précédentes, **caractérisé par le fait qu'**il présente, entre la platine de support (20) interposée entre une paire (16) de patins, et un patin (19) d'une paire (16) de patins occupant une position successive en sens inverse de la direction du mouvement de l'écouvillon, un organe de liaison (35) solidarisant ladite platine de support (20) et ledit patin (19).

10. Segment selon la revendication 9, **caractérisé par le fait que** l'organe de liaison (35) est agencé dans la direction longitudinale du patin (19).

11. Segment (15) selon la revendication 9 ou 10, **caractérisé par le fait que** l'organe de liaison (35), situé entre une platine de support (20) et un patin (19), peut être mis en place sur ladite platine de support (20) par une douille (37).

12. Segment (15) selon l'une des revendications 8 à 11, **caractérisé par le fait qu'**il présente, entre des patins (19) en succession mutuelle, une pièce intercalaire (17) reliée par une extrémité à une paire (16) de patins successive, à l'aide d'une partie de membrure transversale (36a).

13. Segment (15) selon l'une des revendications précédentes, **caractérisé par le fait qu'**il présente une partie de membrure transversale (36a, 36b), par laquelle il peut être relié à un segment (15) voisin.

14. Segment (15) selon la revendication 13, **caractérisé par le fait que** la partie de membrure transversale (36a, 36b) est réalisée de telle sorte qu'elle puisse être reliée à une partie de membrure transversale concordante (36b, 36a) d'un segment (15) voisin.

15. Segment (15) selon l'une des revendications précédentes, **caractérisé par le fait que** les surfaces des côtés supérieurs des patins (19) sont bombées transversalement vis-à-vis de la direction longitudinale desdits patins (19).

16. Segment (15) selon l'une des revendications précédentes, **caractérisé par le fait que** des garnitures métalliques d'usure (29), noyées dans les patins (19), se trouvent dans l'affleurement de la face supérieure du côté supérieur desdits patins (19).

17. Segment (15) selon l'une des revendications précédentes, **caractérisé par le fait que** les patins (19) comportent des évidements (30).

18. Segment (15) selon l'une des revendications précédentes, **caractérisé par le fait qu'**il est réalisé de telle sorte que les platines de support (20) puissent être implantées à la face inférieure des patins (19).

19. Segment selon l'une des revendications précédentes, **caractérisé par le fait que** les patins (19) consistent en un matériau élastique.

20. Segment (15) selon l'une des revendications précédentes, **caractérisé par le fait que** ledit segment (15) est globalement ou sensiblement réalisé sous la forme d'une pièce monobloc comprenant l'un ou plusieurs des éléments constitutifs suivants : patins (19), organes de liaison (35), pièces intercalaires (17), région (18) s'achevant coniquement, membrure transversale (36), partie de membrure transversale (36a, 36b).

21. Corps (11) de support de capteurs revêtant la forme d'un corps creux cylindrique destiné à un écouvillon constitué de plusieurs segments (15) selon l'une des revendications précédentes.

22. Corps (11) de support de capteurs, selon la revendication 21, **caractérisé par le fait qu'**il englobe un dispositif de liaison à l'aide duquel les segments (15) sont solidarisés pour obtenir un corps creux à surface enveloppante cylindrique.

23. Corps (11) de support de capteurs, selon la revendication 22, **caractérisé par le fait que** le dispositif de liaison comprend des plaquettes élastiques (25) configurées en U, interposées entre des segments (15) voisins.

24. Ecouvillon **caractérisé par le fait qu'**il comprend des segments (15) selon l'une des revendications 1 à 20, ou un corps (11) de support de capteurs conforme à l'une des revendications 21 à 23.
